(19) Europäisches Patentamt
European Patent Office
Office européen des brevets

(11) Veröffentlichungsnummer : **0 074 515**
**B1**

(12) # EUROPÄISCHE PATENTSCHRIFT

(45) Veröffentlichungstag der Patentschrift : **20.08.86**

(21) Anmeldenummer : **82107660.1**

(22) Anmeldetag : **21.08.82**

(51) Int. Cl.⁴ : **C 09 B 63/00**, C 09 B 45/00, C 09 B 27/00, C 09 B 67/22, C 09 B 67/20, C 09 B 29/52

(54) **Azobarbitursäure-Derivate, ihre festen Lösungen, Einschlussverbindungen und Interkalationsverbindungen.**

(30) Priorität : **02.09.81 DE 3134725**
**29.04.82 DE 3215875**

(43) Veröffentlichungstag der Anmeldung : **23.03.83 Patentblatt 83/12**

(45) Bekanntmachung des Hinweises auf die Patenterteilung : **20.08.86 Patentblatt 86/34**

(84) Benannte Vertragsstaaten : **CH DE FR GB LI**

(56) Entgegenhaltungen :
**FR-A- 2 121 048**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Lorenz, Manfred, Dr.**
**Roggendorfstrasse 51**
**D-5000 Köln 80 (DE)**
Erfinder : **Schündehütte, Karl Heinz, Prof. Dr.**
**Klief 75**
**D-5090 Leverkusen 3 (DE)**

**EP 0 074 515 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Azobarbitursäure-Derivate, ihre festen Lösungen, Einschlußverbindungen und Interkalationsverbindungen, Verfahren zur Herstellung der neuen Verbindungen sowie ihre Verwendung als Pigmente.

Aus der FR-2 121 048 sind Salze und Komplexe der Azobarbitursäure bekannt.

Die neuen Azobarbitursäure-Derivate entsprechen in einer ihrer tautomeren Strukturen der Formel

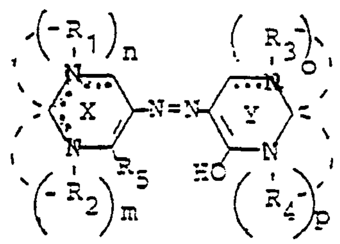

(I)

in der die mit

X und Y bezeichneten Ringe je einen oder zwei Substituenten aus der Reihe $=O$, $=S$, $=NR_7$, $-NR_6R_7$, $-OR_6$, $-SR_6$, $-COOR_6$, $-CN$, $-CONR_6R_7$, $-SO_2R_8$, $-N(R_6)-CN$, Alkyl, Cycloalkyl, Aryl, Aralkyl tragen können, wobei die Summe der endo- und exocyclischen Doppelbindungen für jeden der Ringe X und Y drei ist,

$R_6$, für Wasserstoff, Alkyl, Cycloalkyl, Aryl oder Aralkyl und

$R_7$ für Wasserstoff, Cyan, Alkyl, Cycloalkyl, Aryl, Aralkyl oder Acyl stehen,

$R_8$ Alkyl, Cycloalkyl, Aryl oder Aralkyl bezeichnet,

$R_1$, $R_2$, $R_3$, $R_4$ für Wasserstoff, Alkyl, Cycloalkyl, Aryl, oder Aralkyl stehen und weiterhin, wie in Formel I durch die unterbrochenen Linien angedeutet wird, 5- oder 6-gliedrige Ringe ausbilden können, an die weitere Ringe ankondensiert sein können.

$R_5$ $-OH$, $-NR_6R_7$, Alkyl, Cycloalkyl, Aryl oder Aralkyl bezeichnet, wobei die für $R_1$-$R_8$ genannten CH-Bindungen enthaltenden Substituenten ihrerseits substituiert sein können und m, n, o, p 1 oder für den Fall daß von den Ring-Stickstoffatomen Doppelbindungen ausgehen, wie in Formel I durch die punktierten Linien angedeutet wird, auch O bezeichnen können mit Ausnahme von Azobarbitursäure, Azouracil und Uracil-5-azobarbitursäure sowie deren Salzen.

Die Erfindung betrifft weiterhin Salze, Komplexe, Einschlußverbindungen und Interkalationsverbindungen der Verbindungen der Formel I, wobei Salze, Komplexe, Einschlußverbindungen und Interkalationsverbindungen und feste Lösungen von Azobarbitursäure sowie Azourazil und Uracil-5-azobarbitursäure sowie deren Alkalisalze ausgenommen sind.

Die festen Lösungen oder Einschlußverbindungen enthalten organische und/oder anorganische Verbindungen.

Unter Berücksichtigung der angegebenen Ausnahmebestimmungen betrifft die Erfindung vorzugsweise folgende Verbindungen oder deren Salze, Komplexe, feste Lösungen, Einschlußverbindungen und Interkalationsverbindungen.

1. Verbindungen, die in Form ihrer freien Säuren der Formel I entsprechen, bei denen der mit X bezeichnete Ring für einen Ring der Formeln

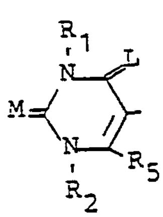 , 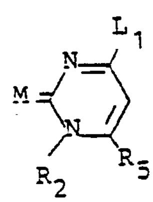 , 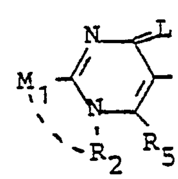 ,

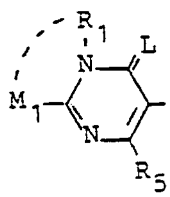 oder 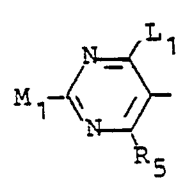 .

steht, in denen

L, M $=O$, $=S$ oder $=NR_7$,

$L_1$ Wasserstoff, $-OR_6$, $-SR_6$, $-NR_6R_7$, $-COOR_6$, $-CONR_6R_7$, $-CN$, Alkyl, Cycloalkyl, Aryl, Aralkyl und

$M_1$ $-OR_6$, $-SR_6$, $-NR_6R_7$, $-COOR_6$, $-CONR_6R_7$, $-CN$, $-SO_2R_8$, $-\underset{R_6}{N}-CN$, Alkyl, Cycloalkyl, Aryl oder Aralkyl bezeichnen wobei die Substituenten $M_1$ und $R_1$ oder $M_1$ und $R_2$ einen 5- oder 6-gliedrigen Ring ausbilden können.

2. Verbindungen, die in Form ihrer freien Säuren der Formel I entsprechen, bei denen der mit Y bezeichnete Ring für einen Ring der Formeln

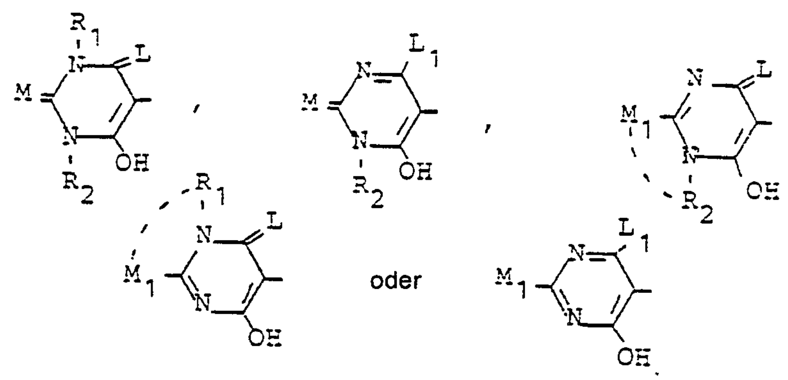

, , oder

steht.

3. Verbindungen, die in Form ihrer freien Säuren in einer ihrer tautomeren Strukturen den Formeln II oder III entsprechen

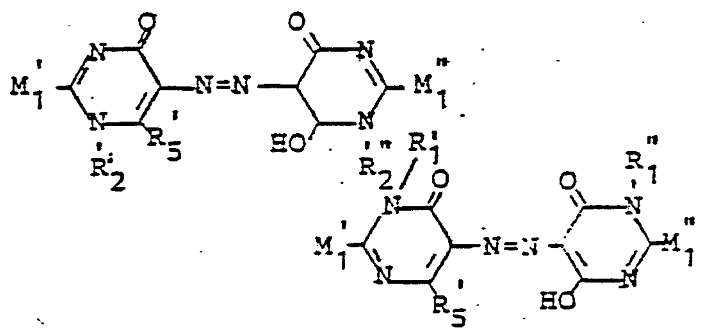

(II)

(III)

in denen

$R'_5$ $-OH$ oder $-NH_2$ bezeichnet,

$R'_1$, $R''_1$, $R'_2$, $R''_2$ für Wasserstoff steht und

$M'_1$, $M''_1$ Wasserstoff, $-OH$, $-NH_2$, $-NHCN$, Arylamino oder Acylamino bezeichnen.

Substituenten in der Bedeutung von Alkyl bezeichnen vorzugsweise $C_1$-$C_6$-Alkyl, das beispielsweise durch Halogen, wie Chlor, Brom, Fluor, $-OH$, $-CN$, $-NH_2$ oder $C_1$-$C_6$-Alkoxy substituiert sein kann.

Substituenten in der Bedeutung von Cycloalkyl bezeichnen vorzugsweise $C_3$-$C_7$-Cycloalkyl, insbesondere $C_5$-$C_6$-Cycloalkyl, das beispielsweise durch $C_1$-$C_6$-Alkyl, $C_1$-$C_6$-Alkoxy, Halogen wie Cl, Br, F, $C_1$-$C_6$-Alkoxy, $-OH$, $-CN$ und $-NH_2$ substituiert sein kann.

Substituenten in der Bedeutung von Aryl bezeichnen vorzugsweise Phenyl oder Naphthyl, die Beispielsweise durch Halogen wie F, Cl, Br, $-OH$, $C_1$-$C_6$-Alkyl, $C_1$-$C_6$-Alkoxy, $-NH_2$, $-NO_2$ und $-CN$ substituiert sein können.

Substituenten in der Bedeutung von Aralkyl bezeichnen bevorzugt Phenyl- oder Naphthyl-$C_1$-$C_4$-alkyl, die in den aromatischen Resten beispielsweise durch Halogen wie F, Cl, Br, $-OH$, $C_1$-$C_6$-Alkyl, $C_1$-$C_6$-Alkoxy, $-NH_2$, $-NO_2$ und $-CN$ substituiert sein können.

Substituenten in der Bedeutung von Acyl bezeichnen vorzugsweise ($C_1$-$C_6$-Alkyl)-carbonyl, Phenylcarbonyl, $C_1$-$C_6$-Alkylsulfonyl, Phenylsulfonyl, gegebenenfalls durch $C_1$-$C_6$-Alkyl, Phenyl und Naphthyl substituiertes Carbamoyl, gegebenenfalls durch $C_1$-$C_6$-Alkyl, Phenyl und Naphthyl substituiertes Sulfamoyl oder gegebenenfalls durch $C_1$-$C_6$-Alkyl, Phenyl und Naphthyl substituiertes Guanyl, wobei die genannten Alkylreste beispielsweise durch Halogen wie Cl, Br, F, $-OH$, $-CN$, $-NH_2$ oder $C_1$-$C_6$-Alkoxy substituiert sein können und die genannten Phenyl- und Naphthylreste beispielsweise durch Halogen wie F, Cl, Br, $-OH$, $C_1$-$C_6$-Alkyl, $C_1$-$C_6$-Alkoxy, $-NH_2$, $-NO_2$ und $-CN$ substituiert sein können.

Für den Fall, daß $M_1R_1$ oder $M_1R_2$ bzw. $R_1$, $R_2$, $R_3$, $R_4$, wie in Formel I durch die unterbrochenen Linien angedeutet wird, 5- oder 6- gliedrige Ringe ausbilden, handelt es sich Vorzugsweise um Triazol-, Imidazol-, oder Benzimidazol-, Pyrimidin- oder Chinazolin-Ringsysteme.

Als Salze der Verbindungen der Formel I kommen vorzugsweise die Salze und Komplexe der Mono-, Di-, Tri- und Tetraanionen mit den Metallen Li, Cs, Mg, Cd, Co, Al, Cr, Sn, Pb, besonders bevorzugt Na, K, Ca, Sr, Ba, Zn, Fe, Ni, Cu, Mn, in Betracht.

Besondere Bedeutung kommen den Nickelsalzen, bzw. -komplexen und deren feste Lösungen und Einschlußverbindungen zu.

Besondere Bedeutung im Rahmen der Erfindung besitzt weiterhin Cyanimino-azobarbitursäure, die in Form ihrer freien Säure in einer ihrer tautomeren Formen der Formel

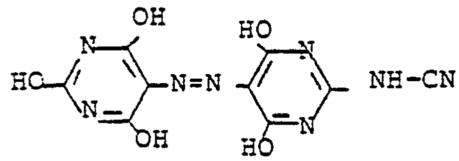

(IV)

entspricht und ihre Salze insbesondere die Salze des Mono- oder Dianions sowie die entsprechenden festen Lösungen und Einschlußverbindungen.

Die Salze lassen sich beispielsweise durch folgende Formeln darstellen :

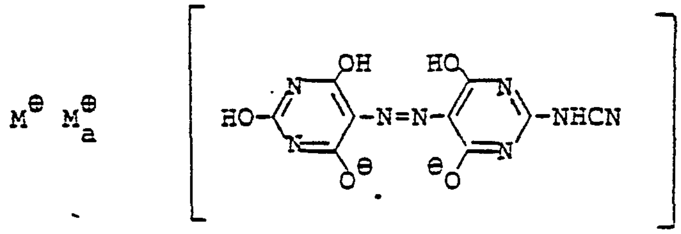

(V)

in der M⊕ und $M_a$⊕ gleiche oder verschiedene Kationen bedeuten ;

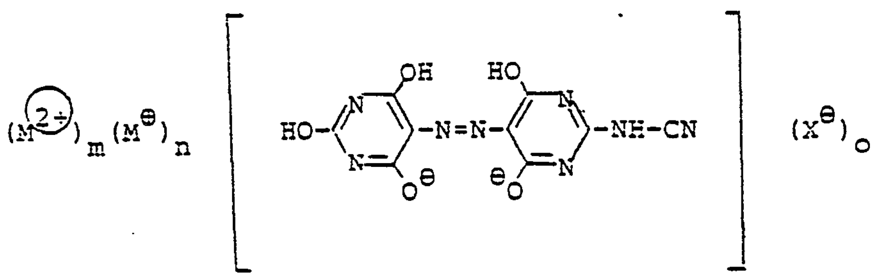

(VI)

in der $M^2$⊕ und M⊕ Kationen und X⊕ ein Anion bedeuten und in der folgende Wertekombinationen m, n, o möglich sind : m = 1, n = 0, o = 0 ; m = 2, n = 0, o = 2 sowie m = 1, n = 1, o = 1, wobei für den Fall, daß o = 2 ist, die beiden X⊖- Reste gleich oder verschieden sein oder auch einem zweiwertigen Anion angehören können ;

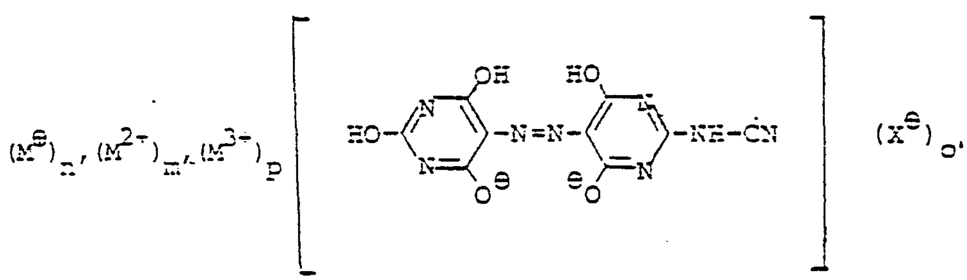

(VII)

in der M⊕, $M^2$⊕, $M^3$⊕ Kationen und X⊖ ein Anion bezeichnen und in den folgende Wertekombinationen n', m', p, o' möglich sind : n' = 0, m' = 0, p = 2, o' = 4 ; n' = 0, m' = 0, p = 1, o' = 1 ; n = 1, m' = 0, p = 1, o' = 2 und n' = 0, m' = 1, p = 1, o' = 3, wobei für den Fall daß o' 1 ist, die X⊖-Reste gleich oder verschieden oder einem mehrwertigen Anion angehören können.

Als Kationen kommen bevorzugt H⊕ und/oder die Kationen ein-, zwei- und/oder dreiwertiger Metalle wie Li, Cs, Na, K, Mg, Ca, Sr, Ba, Zn, Cd, Fe, Co, Ni, Cu, Al, Cr, Mn, Sn, Pb in Frage, von denen K, Ca, Sr, Ba, Zn, Cd besonders bevorzugt sind.

Die anionischen Reste $X^{\ominus}$ leiten sich von organischen oder anorganischen Säuren wie Ameisensäure, Essigsäure, Bernsteinsäure, Weinsäure, Chlorwasserstoff, Bromwasserstoff, Jodwasserstoff, Fluorwasserstoff, Schwefelsäure, Phosphorsäure, Salpetersäure ab. Vorzugsweise steht $X^{\ominus}$ auch für das Mono- oder Dianion der Cyanimino-barbitursäure der Formel I.

Bevorzugt sind Salze der Formel I bzw. II, in denen $M^{\oplus}$ für $H^{\oplus}$ steht und $M^{\oplus}_a$ $K^{\oplus}$ bzw. $M^{2+}$ $Ba^{2+}$, $Ba^{2+}$, $Ca^{2+}$, $Sr^{2+}$ oder $Ni^{2+}$ bezeichnen. Besondere Bedeutung kommt auch dem Nickelsalz der Formel

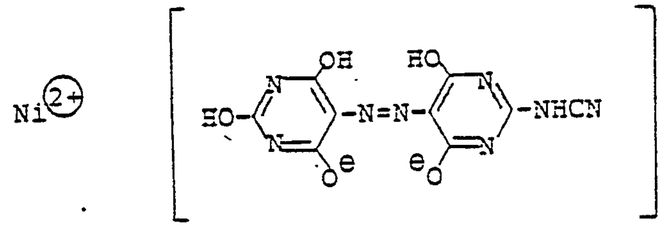
(VIII)

zu.

Die festen Lösungen, Einschlußverbindungen oder Interkalationsverbindungen unterscheiden sich von einer Mischung der Komponenten dadurch, daß sie in mindestens einer physikalischen Eigenschaft von der Summe der Eigenschaften der Komponenten verschieden sind.

Wesentliche Unterschiede können z. B. bei den Lösungseigenschaften auftreten. So wird beispielsweise die Konzentration einer löslichen Substanz in einem Lösungsmittel erheblich niedriger sein, wenn sie nicht als reine Substanz sondern als Komponente einer festen Lösung vorliegt.

Im Falle einer schwerlöslichen Substanz wird z. B. eine Menge an Lösungsmittel, die normalerweise ausreicht, diese Substanz vollständig zu lösen, im Falle der Einschlußverbindung oder festen Lösung nicht zum Extrahieren ausreichen. Andererseits ist es denkbar, daß ein Lösungsmittel eine derartig starke Affinität zur einschließenden Verbindung aufweist, daß es die darin gelöste Substanz mehr oder weniger vollständig verdrängen kann, wobei wiederum eine feste Lösung entsteht.

Ein wesentliches Merkmal, in dem sich die erfindungsgemäßen festen Lösungen, Einschlußverbindungen- oder Interkalationsverbindungen von einem Gemisch der Komponenten unterscheiden können, sind Röntgen- Pulverdiagramme, die nicht durch Addition der Diagramme der Einzelkomponente erhalten werden können. Im einfachsten Falle verändern sich die Intensitäten mehrerer Linien, in der Regel besteht jedoch nur noch eine geringe oder praktisch keine Ähnlichkeit mehr mit den Diagrammen der einzelnen Komponenten ; nur falls eine Komponente im Überschuß vorhanden ist, werden dann ihre Linien neben denen der festen Lösung erscheinen. Diese Unterscheidungsmerkmale zwischen einer festen Lösung, einer Einschlußverbindung oder einer Interkalationsverbindung und einer Mischung sind dem Fachmann bekannt und können der Literatur entnommen werden.

Substanzen, die in den Verbindungen der Formel I oder deren Salzen und Komplexen, insbesondere den Nickelkomplexen eingeschlossen werden können, entstammen den verschiedenartigsten Verbindungsklassen. Aus rein praktischen Gründen sind solche Verbindungen bevorzugt, die unter Normalbedingungen flüssig oder fest sind.

Von den flüssigen Substanzen sind wiederum solche bevorzugt, die einen Siedepunkt von 100 °C oder darüber, bevorzugt von 150 °C und darüber, aufweisen. Geeignete Verbindungen sind vorzugsweise acyclische und cyclische organische Verbindungen z. B. aliphatische und aromatische Kohlenwasserstoffe die weitersubstituiert sein können, z. B. durch OH, COOH, $NH_2$, substituiertes $NH_2$, $CONH_2$, substituiertes $CONH_2$, $SO_2NH_2$, substituiertes $SO_2NH$, $SO_3H$, Halogen, $NO_2$, CN, —$SO_2$—Alkyl, —$SO_2$—Aryl, —O—Alkyl, —O—Aryl, —O—Acyl.

Im einzelnen seien z. B. genannt : Paraffine und Paraffinöle ; Triisobutylen, Tetraisobutylen ; Mischungen von aliphatischen und aromatischen Kohlenwasserstoffen, wie sie z. B. bie der Erdölfraktionierung anfallen ; chlorierte Paraffinkohlenwasserstoffe wie Dodecylchlorid oder Stearylchlorid ; $C_{10}$-$C_{30}$-Alkohole wie 1-Decanol, 1-Dodecanol, 1-Hexadecanol, 1-Octadecanol und ihre Mischungen, Oleinalkohl, 1,12-Octadecandiol, Fettsäuren und ihre Salze und Mischungen, z. B. Ameinsensäure, Essigsäure, Dodecansäure, Hexadecansäure, Octadecansäure, Ölsäure, Fettsäureester, z. B. die Methylester der $C_{10}$-$C_{20}$-Fettsäuren, Fettsäureamide, wie Stearinsäureamid, Stearinsäuremonoethanolamid, Stearinsäurediethanolamid, Stearinsäurenitril, Fettamine, z. B. Dodecylamin, Cetylamin, Hexadecylamin, Octadecylamin, und andere ; isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenapthen, Fluoren, Anthracen, Phenanthren, m-, p-Terphenyl, o-, p-Dichlorbenzol, Nitrobenzol, 1-Chlornaphthalin, 2-Chlornaphthalin, 1-Nitronaphthalin, isocyclische Alkohole und Phenole und ihre Abkömmlinge wie Benzylalkohol, Decahydro-2-naphthol, Diphenylether, Sulfone, z. B. Diphenylsulfon, Methylphenylsulfon, 4,4'-Bis-2-hydroxyethoxydiphenylsulfon, isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec-butylnaphthalinsulfonsäuregemisch, Biphenyl-4-sulfonsäure, 1,4-, 1,5-, 2,6-, 2,7-Naphthalindisulfonsäure, 3-Nitro-1,5-naphthalindisulfonsäure, Anthrachinonsulfosäure-1, Anthrachinonsulfosäure-2, Diphenyl-4,4'-disulfonsäure, 1,3,6-Naphthalintrisulfonsäure und die Salze, der vorgenannten Sulfonsäuren z. B. die Natrium-, Kalium-, Calcium-, Zink-, Nickel- und Kupfersalze ; Sulfonamide wie Benzosulfonamid, 2-, 3- und 4-Nitrobenzolsulfonamid, 2-, 3- und 4-Chlorbenzolsulfonamid, 4-Methoxy-benzosulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen.

Insbesondere geeignet sind auch z. B. : Harnstoff und substituierte Harnstoffe wie Phenylharnstoff, Dodecylharnstoff und andere ; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Bevorzugte feste Lösungen, Interkalations- oder Einschlußververbindungen enthalten grenzflächenaktive Verbindungen, insbesondere Tenside, die z. B. aus K. Lindner, Tenside-Textilhilfsmittel-Waschrohstoffe, 2. Auflage, Band I, Wissenschaftliche Verlagsgesellschaft mbH, Stuttgart, 1964, bekannt sind. Dabei kann es sich um anionenaktive, nichtionogene oder kationenaktive Verbindungen oder um Ampholyte handeln. Geeignete anionenaktive Verbindungen sind z. B. : Echte Seifen, Salze der Aminocarbonsäuren, Salze niederer bzw. höherer acylierter Aminocarbonsäuren, Fettsäuresulfate, Sulfate von Fettsäureestern, -amiden usw., primäre Alkylsulfate, Sulfate von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Phosphinate, Thiosulfate, Hydrosulfite, Sulfinate, Persulfate. Geeignete nicht-ionogene Verbindungen sind z. B. : Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z. B. : Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl—$OCH_2$—N-pyridiniumsalze, Alkyl—CO—NH—$CH_2$—N-pyridiniumsalze, Alkylethylenharnstoffe, Sulfoniumverbindungen, Phosphoniumverbindungen, Arsoniumverbindungen, Alkylguanidine, Acylbiguanidide. Geeignete Ampholyte sind z. B. : Alkylbetaine, Sulfobetaine und Aminocarbonsäuren.

Besonders bevorzugte feste Lösungen, Interkalations- oder Einschlußverbindungen enthalten nichtionogene Tenside, insbesondere Ethylenoxidadditionsprodukte von Fettalkoholen, Fettsäuren, Fettaminen sowie von Octyl- und Nonylphenol.

Eine weitere wichtige Gruppe von Verbindungen die mit den Verbindungen der Formel I oder ihren Salzen und Komplexen, insbesondere den Ni-Komplexen, feste Lösungen, Interkalations- oder Einschlußverbindungen bilden sind natürliche Harze und Harzsäuren wie z. B. Abietinsäure und ihre Umwandlungsprodukte und Salze. Solche Umwandlungsprodukte sind z. B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z. B. die Methyl-, Hydroxyethyl-, Glykol-, Glycerin-, und Pentaerythritester, sowie Harzsäurenitrile und Harzsäureamine sowie Dehydroabietylalkohol.

Ebenfalls für eine Einlagerung geeignet sind Polymere vorzugsweise wasserlösliche Polymere, z. B. Ethylen-Propylenoxid-Blockpolymere, Polyvinylalkohol, Polyacrylsäuren, modifizierte Cellulosen, wie Carboxymethylcellulosen, Hydroxyethyl- und -propylcellulosen, Methyl- und Ethylhydroxyethylcellulosen.

Ganz besonders wichtig sind feste Lösungen, Einschluß- oder Interkalationsverbindungen, bei denen Farbstoffe oder Farbstoffgemische in das Molekülgerüst der Verbindungen der Formel I oder ihrer Salze eingelagert sind, da sich dadurch besondere Effekte, wie z. B. höhere Farbstärke oder andere Farbtöne, erzielen lassen. Die Farbstoffe können zu den verschiedensten Farbstoffklassen gehören. In Frage kommen z. B. Azofarbstoffe, Anthrachinonfarbstoffe Chinophthalonfarbstoffe, Azomethine, Phthalocyaninfarbstoffe und Triphenylmethanfarbstoffe.

Bevorzugt eingesetzt werden Mono- und Disazofarbstoffe mit 1-3 Sulfogruppen, insbesondere Kupplungsprodukte von Naphthol- oder Naphthylamin-sulfonsäuren.

Die Menge an Substanz die in das Kristallgitter der Verbindungen der Formel I oder ihrer Salze unter Bildung einer festen Lösung, Einschluß- oder Interkalationsverbindung eingelagert werden kann, liegt in der Regel zwischen 60 % und 120 Gew.-%, bezogen auf die Menge an Wirtsverbindung. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genannte Menge an Substanz zugesetzt werden, wobei man gegebenenfalls darauf verzichten kann, einen Überschuß auszuwaschen. Bevorzugt sind Mengen zwischen 10 und 150 %.

Die Herstellung der Verbindungen gemäß Formel I kann so erfolgen, daß man ein in « 5 »-Stellung unsubstituiertes Pyrimidinderivat unter geeigneten Bedingungen mit einem 5-Diazo-pyrimidinderivat

umsetzt, wobei die beiden Komponente so ausgewählt werden, daß sich ein der Formel I entsprechendes Substitutionsmuster ergibt.

Als Ausgangsprodukte geeignete 5-Diazo-pyrimidine sind literaturbekannt oder können nach literaturbekannten Verfahren hergestellt werden. Eine Zusammenstellung von Herstellungsverfahren gibt z. B. M. Regitz in S. Patai, « The Chemistry of Diazonium and Diazo-Groups », Part 2, John Wiley & Sons, 1978, S. 751.

Bevorzugte Herstellungsverfahren sind z. B. die Umsetzung eines 5-Amino- oder 5-Sulfaminopyrimidinderivates mit salpetriger Säure und die sogenannte Azogruppenübertragung, bei der eine Azogruppe von einem Arylsulfonylamid auf ein in 5-Stellung unsubstituiertes CH-acides Pyrimidinderivat übertragen wird. Als Ausgangsprodukte für diese Herstellungsverfahren eignen sich z. B. die folgenden Pyrimidinderivate :

Barbitursäure oder ihre Derivate wie 2-Amino, 2-Cyanamino-, 2-Ureido-, 2-Acetylamino-, 2-Benzoylamino-, 2-Methylsulfonylamino-, 2-Guanidino-, 2-Phenylsulfonylamino-, 2-Anilino-, 2-(2-Chlor-anilino)-, 2-(3-Chloranilino)-, 2-(4-Chloranilino)-, 2-(3,4-Dichloranilino)-,2-(2,5-Dichloranilino)-, 2-(2-Nitroanilino)-, 2-(3-Nitroanilino)-, 2-(4-Nitroanilino)-, 2-(2-Methoxyanilino)-, 2-(4-Methoxyanilino)-, 2-(2-Methylanilino)-, 2-(4-Methylanilino)-, 2-(2,4-Dimethylanilino)-, 2-Benzylamino-, 2-Methylamino-, 2-Dimethylamino-, 2-Butyl-, 2-Ethyl-, 2-Propyl-, 2-Hexyl-, 2-Benzyl- und 2-Phenyl-4,6-dihydroxypyrimidin ; 4,6-Dihydroxypyrimidin ; 1-Methyl-, 1-Ethyl, 1-Benzyl-, 1-Phenyl-, 1-(4-Chlorphenyl)-, 1-(2-Chlorphenyl)-, 1-(3,4-Dichlorphenyl)-, 1-(4-Methylphenyl)-, 1-(2,4-Dimethylphenyl)- und 1-(3-Nitrophenyl)-barbitursäure ; Uracil ; 4-Benzyl-, 4-Ethyl-, 4-Methyl- und 4-Phenyl-2,6-dihydroxypyrimidin.

Die aus diesen oder ähnlichen Pyrimidinderivaten z. B. durch Azogruppenübertragung oder auf andere Weise zugänglichen 5-Diazopyrimidine können unter geeigneten Bedingungen mit in 5-Stellung unsubstituierten CH-aciden Pyrimidinderivaten umgesetzt werden zu Derivaten der Azobarbitursäure. Als für eine derartige Kupplungsreaktion geeignete in 5-Stellung unsubstituierte Pyrimidinverivate kommen die gleichen in Frage, die auch als Ausgangsprodukte für die Herstellung von 5-Diazo-pyrimidin dienen können. Zusätzlich können z. B. noch ausgeführt werden :

4-Amino-2,6-dihydroxypyrimidin, 2,4-Diamino-6-hydroxypyrimidin, 4,6-Diamino-2-hydroxypyrimidin, 4-Amino-2-cyanamino-6-hydroxy-pyrimidin, 2-Phenyl-4-amino-6-hydroxypyrimidin, Cytosin, Orotsäure, 4-Carbamoyl-2,6-dihydroxypyrimidin, 4-Carboxy-6-hydroxy-2-phenyl-pyrimidin, 7-Hydroxy-5-methyl-s-triazolo[1,5-a]pyrimidin, 2,5-Dimethyl-7-hydroxy-s-triazolo[1,5-a]pyrimidin ; 5,7-Dihydroxy-s-triazolo[1,5-a]pyrimidin, 5,7-Dihydroxy-2-methyl-s-triazolo[1,5-a]pyrimidin, 7-Amino-5-hydroxy-s-triazolo[1,5-a]pyrimidin, 7-Amino-5-hydroxy-2-methyl-s-triazolo[1,5-a]pyrimidin, 2,4-Dihydroxy-pyrimidin[1,2-a]benzimidazol, 4-Amino-2-hydroxy-pyrimido[1,2-a]benzimidazol, 2H-Pyrimido-[2,1-b]benzothiazol-2,4-(3H)-dion.

Alle genannten Pyrimidinderivate können einzeln oder als Mischungen eingesetzt werden.

Die Kupplungsreaktion kann auf verschiedene Weise durchgeführt werden. So kann man z. B. die 5-Diazopyrimidine nach ihrer Herstellung zunächst isolieren und gegebenenfalls durch Umkristallisieren oder Umfällen reinigen. Ein bevorzugtes Verfahren besteht jedoch darin, die bei der sogenannten Azogruppenübertragung entstehenden 5-Diazo-pyryimidine ohne Zwischenisolierung unmittelbar weiter umzusetzen.

Die Kupplungsreaktion wird bevorzugt in einem wasserhaltigen Milieu in einem schwach sauren bis schwach alkalischen pH-Bereich, d. h. zwischen pH ca. 2 und pH ca. 12, ausgeführt.

Weist das 5-Diazopyrimidin in einer seiner tautomeren Formen an einem seiner Ringstickstoffatome noch ein Wasserstoffatom auf, so kann die dadurch bedingte NH-Acidität dazu führen, daß das Diazopyrimidin im neutralen bis alkalischen Bereich in das weniger reaktionsfähige Anion übergeht. In diesem Fall wählt man den pH-Bereich zweckmäßigerweise so, daß das Diazopyrimidin ganz oder teilweise in seiner undissozierten Form vorliegt. Andererseits reagieren die als Kupplungskomponenten dienenden, in 5-Stellung unsubstituierten Pyrimidinderivate dann besonders rasch, wenn diese ganz oder teilweise als Anion vorliegen. Hieraus ergibt sich, daß häufig die maximale Reaktionsgeschwindigkeit in einem bestimmten, von Fall zu Fall verschiedenen pH-Bereich liegen wird, den man gegebenenfalls durch Vorversuche ermitteln kann.

Je nach Art der Komponenten und dem pH-Wert kann die Reaktionsdauer zwischen ca. einer und 24 Stunden oder noch länger und die Reaktionstemperatur zwischen 20° und 100 °C gewählt werden. Es kann auch zweckmäßig sein, bei erhöhter Temperatur und unter Druck zu arbeiten.

Die bei der Reaktion entstehenden Derivate der Azobarbitursäure sind schwache bis starke Säuren, die mit geeigneten Kationen Salze oder Komplexe bilden, die sich von den Mono-, Di-, Tri- oder Tetraanionen herleiten können.

Bevorzugte geeignete Kationen sind z. B. die Kationen der Alkali- und Erdalkalimetalle wie die von Lithium, Natrium, Kalium, Magnesium, Calcium, Strontium und Barium, weiterhin Kationen von Eisen, Kobalt, Nickel, Cadmium, Mangan, Zink, Aluminium, Chrom, Kupfer.

Die Salze oder Komplexe können auf verschiedenen Wegen hergestellt werden. Sind z. B. während der Kupplungsreaktion geeignete Metallsalze zugegen, so können unmittelbar die Salze oder Komplexe

der Azobarbitursäuren entstehen, die sich in Abhängigkeit vom pH-Wert von den verschiedenen Dissoziationsstufen der Azobarbitursäuren herleiten können. Man kann aber auch zuerst kuppeln und dann das Reaktionsprodukt unmittelbar oder aber gegebenenfalls nach Zwischenisolieren und Wiederanschlämmen in einem geeigneten Lösungsmittel umsetzen. Bei der Kupplungsreaktion können in Abhängigkeit von der Art der Komponenten und dem pH-Wert entweder die undissozierten Azobarbitursäuren oder aber bereits Salze, z. B. Alkalisalze, entstehen, die dann in einer doppelten Umsetzung mit Metallsalzen umgesetzt werden können.

Die Salz- oder Komplexbildung wird bevorzugt in einem wasserhaltigen Milieu durchgeführt, wobei die pH-Werte je nach Art der Komponenten zwischen mineralsauer und alkalisch liegen müssen. Die Reaktionstemperatur kann zwischen 0° und 100 °C betragen, bevorzugt 30°-100 °C ; die Reaktionszeiten zwischen einigen Stunden bei tiefen und einigen Minuten bei hohen Temperaturen. Darüber hinaus kann es zum Erzielen besonders günstiger anwendungstechnischer Eigenschaften nützlich sein, das Produkt länger als für die zur Salz- oder Komplexbildung erforderliche Zeit zu erhitzen, gegebenenfalls auch unter Druck auf höhere Temperaturen.

Setzt man bei der Salz- bzw. Komplexbildung Mischungen von Metallsalzen ein, so können je nach den Bedingungen auch gemischte Salze oder Komplexe entstehen.

Die Bildung von festen Lösungen, Interkalationsverbindungen oder Einschlußverbindungen, bei denen zusätzliche Substanzen in den Molekülverband eingelagert sind, kann so erfolgen, daß man vor, während oder nach der Komplexbildung die einzulagernde Substanz oder das Substanzgemisch in geeigneter Form zu der Reaktionsmischung hinzufügt und zwischen einigen Minuten und bis zu ca. 24 Stunden auf Temperaturen zwischen 30 und 100 °C erhitzt. Vor allem bei schwer löslichen Substanzen kann es auch hier zweckmäßig sein, bei erhöhten Temperaturen und unter Druck zu arbeiten. Man kann jedoch den Komplex auch isolieren und den Preßkuchen oder die getrocknete Substanz in einem geeigneten Lösungsmittel anschlämmen und danach in gleicher Weise die gewünschte Substanz einlagern.

Die einzulagernden Substanzen können je nach Art und Konsistenz als Festsubstanzen, Flüssigkeiten, Lösungen, Anschlämmungen, Suspensionen, Dispersionen oder Emulsionen zugefügt werden.

Die Herstellung der Cyaniminoazobarbitursäure bzw. ihrer Salze kann auf verschiedenen Wegen erfolgen :

1. Diazobarbitursäure wird im schwach sauren bis neutralen pH-Bereich auf 2-Cyaniminobarbitursäure gekuppelt. Zur Herstellung der erfindungsgemäßen Salze werden vor, während oder nach der Kupplungsreaktion geeignete, zur doppelten Umsetzung befähigte Salze eingesetzt.

2. 2-Cyanimino-5-diazobarbitursäure wird im neutralen bis schwach sauren pH-Bereich auf Barbitursäure gekuppelt. Durch Zugabe von Salzen, die zur doppelten Umsetzung befähigt sind, vor, während oder nach der Kupplungsreaktion lassen sich die erfindungsgemäßen Salze herstellen.

3. Barbitursäure und 2-Cyaniminobarbitursäure werden vorgelegt und bei pH 4-8 mit einem azogruppenübertragenden Agens aufeinander gekuppelt. Zur Herstellung der erfindungsgemäßen Salze werden vor, während oder nach der Reaktion geeignete, zur doppelten Umsetzung befähigte Salze eingesetzt.

Die unter 1.-3. beschriebenen Verfahren sowie allgemein die im Vorhergehenden beschriebenen Verfahren zur Herstellung von substituierten Azobarbitursäuren sowie ihrer Salze, Komplexe, festen Lösungen, Einschluß- und Interkalationsverbindungen können in wäßrigen, wäßrig-organischen oder organischen Medien, vorzugsweise bei Temperaturen von 20-150 °C, besonders bevorzugt 50-100 °C, durchgeführt werden.

Vorteilhaft können die beschriebenen Herstellungsverfahren auch in Gegenwart nicht-ionischer, anionischer, kationischer oder ampholytischer, oberflächenaktiver Verbindungen durchgeführt werden.

Geeignete nicht-ionische Dispergiermittel sind z. B. nichtionische Umsetzungsprodukte von Ethylenoxid mit Fettalkoholen oder Nonylphenol. Geeignete anionische oberflächenaktive Verbindungen sind in K. Lindner, Tenside-Textilhilfsmittel-Waschrohstoffe, 2. Auflage, Wiss. Verlagsgesellschaft, Stuttgart, 1964, Band I, S. 571-836, oder in Ullmanns Encyklopädie der technischen Chemie, 4. Auflage, Verlag Chemie, Weinheim/Bergstr., 1975, Band 10, S. 457-458, beschrieben.

Besonders geeignet sind solche, die aus den folgenden Stoffklassen stammen : Fettsäuresalze, -sulfate, Sulfate von Fettsäureestern, und -amiden, Alkylsulfate, Sulfate von alkoxylierten Alkoholen, Sulfate von acylierten Alkanolaminen, langkettige Alkylsulfonate ($C_6$-$C_{20}$), Fettsäureestersulfonate, Fettsäureamidsulfonate, Sulfobernsteinsäureester und -amide, ($C_6$-$C_{20}$-Alkyl)-acyltauride, perfluorierte Alkylsulfonate, Alkylbenzolsulfonate (z. B. vom Typ « Marlon »), Alkylnaphthalinsulfonate, Arylethersulfonate, Alkylbenzimidazolsulfonate, Alkoxycarboxylate, Alkylmalonsäuresalze, Alkylbernsteinsäuresalze, Seifen.

Geeignete kationische oder ampholytische oberflächenaktive Verbindungen gehören beispielsweise folgenden Stoffklassen an : Fettaminsalze, quartäre Alkylammoniumsalze (Typ « Hyamin »), Alkylbenzoylammoniumsalze (Typ « Zephirol »), Alkanolaminsalze von Ethern oder Estern, Alkylpyridiniumsalze oder

Eiweißampholyte, substituierte Betaine und Sulfobetaine vom Typ « Tego Betain », substituierte Aminocarbonsäuren. Auf diese Weise lassen sich Pigmentpräparationen herstellen, die 0,01-30 Gew.-%, bezogen auf das Gewicht der Azobarbitursäure-Verbindung, vorzugsweise 1-10 Gew.-%, an oberflächenaktiver Verbindung enthalten.

Bei den vorstehend beschriebenen Verfahren kann die Verlackung vervollständigt werden, indem man durch Zugabe von Säuren, insbesondere Mineralsäuren wie Salz-, Salpeter- oder Schwefelsäure, den pH-Wert auf unter 2, vorzugsweise auf ca. 1, absenkt. Zur Herstellung der erfindungsgemäßen Salze werden z. B. etwa 0,5 M bis etwa 3,0 M Salze pro Mol Azobarbitursäure eingesetzt.

Bei den oben beschriebenen Umsetzungen kan man sowohl im wäßrigen Medium oder auch in wäßrig-organischen oder organischen Medien arbeiten. Geeignete organische Lösungsmittel, die vorhanden sein können, sind z. B. : Formamid, N-Methylformamid, N,N-Dimethylformamid, Acetamide, Phosphorsäureamide, Dioxan, Aceton, Pyridin und seine Derivate wie die Picoline, Lutidine und Collidin, ein- oder mehrwertige Alkohole wie Methanol, Ethanol, Isobutanol, Ethylenglykol und organische Säuren wie Ameisensäure und Essigsäure ; bevorzugt werden also mit Wasser ganz oder teilweise mischbare Lösungsmittel oder Gemische dieser Lösungsmittel eingesetzt.

Geeignete Metallsalze zur Herstellung der erfindungsgemäßen Salze der substituierten Azobarbitursäuren sind beispielsweise : Natriumchlorid, Kaliumchlorid, Lithiumchlorid, Lithiumcarbonat, Cäsiumchlorid, Natriumnitrit, Kaliumnitrat, Lithiumhydroxid, Natriumsulfat, Kaliumphosphat, Magnesiumchlorid, Magnesiumsulfat, Calciumchlorid, Calciumacetat, Calciumformiat, Bariumchlorid, Bariumnitrat, Bariumacetat, Bariumcarbonat, Strontiumnitrat, Manganchlorid, Mangansulfat, Eisen-(III)-chlorid, Eisen-(III)-nitrat, Eisen-(II)-sulfat, Cobaltchlorid, Cobaltnitrat, Cobaltsulfat, Aluminiumsulfat, Aluminiumnitrat, Chrom-(III)-sulfat, Chrom-(III)-nitrat, Zinkchlorid, Zinksulfat, Zinkacetat, Cadmiumchlorid, Cadmiumsulfat, Cadmiumnitrat, Kupfer-(II)-sulfat, Kupfer-(II)-chlorid, Kupfer-(II)-acetat und Kupfer-(II)-formiat, Nickelchlorid, Nickelsulfat, Nickelnitrat, Nickelformiat, Nickelacetat.

Man kann auch Mischungen dieser Salze, die verschiedene der genannten Metalle enthalten können, verwenden. Die Verwendung von solchen Salzmischungen empfiehlt sich insbesondere für die Erzielung von Zwischentönen der Farbigen Endprodukte.

Geeignete azogruppenübertragende Agentien sind Verbindungen der Formel

$$R—N_3 \qquad (VI)$$

in der R für einen Acylrest wie $—CONH_2$, $—CO—NH—Alkyl$, $—CON—(Alkyl)_2$, $—COOR_1$, $R_2—SO_2—$ oder einen heterocyclischen Rest steht. $R_1$ bedeutet dabei Alkyl-, Aralkyl- oder Arylreste, $R_2$ steht für Aminogruppen, Alkyl-, Aralkyl-, Aryl- oder heterocyclische Reste. Erfindungsgemäß werden unter Alkylresten geradkettige und verzweigtkettige, substituierte und unsubstituierte Alkylreste verstanden. Die Aminogruppen können beliebig substituiert sein.

Für die Synthese geeignete Azide sind beispielsweise Carbamoylazid, Azidoameisensäuremethylester, Azidoameisensäureethylester, Dimethylaminosulfonsäureazid, Methylsulfonsäureazid, Benzylsulfonsäureazid, Benzolsulfonsäureazid, o-Toluolsulfonsäureazid, m-Toluolsulfonsäureazid, p-Toluolsulfonsäureazid, 3-Nitrobenzolsulfonsäureazid, 2-Chlorbenzolsulfonsäureazid, 4-Chlorbenzolsulfonsäureazid und 2-Azido-3-ethylbenzthiazolium-tetrafluoroborat.

Die Herstellung von 2-Cyaniminobarbitursäure ist beispielsweise aus der DE-PS 158 591 (Friedländer, P. (Hrg.) : Fortschritte der Teerfabrikation und verwandter Industriezweige, Band 7, S. 633, Berlin : J. Springer 1905) bekannt.

Zur Herstellung von 2-Cyanimino-5-diazobarbitursäure in Form des Diazoniumsalzes verfährt man in analoger Weise wie bei der Herstellung von Diazobarbitursäure (s. z. B. M. Regitz, Liebigs Ann. Chem. 676, 101 (1964)).

Die beschriebenen Verfahren führen in guten Ausbeuten und in hoher Reinheit zu den erfindungsgemäßen Verbindungen.

Die erfindungsgemäßen Metallacke der Azobarbitursäure-Derivate enthalten je nach den Herstellungsbedingungen wechselnde Mengen an Kristallwasser. Es werden 0-6, in der Regel 2-4 Moleküle Wasser pro Summenformel gefunden.

Die Verbindungen der Formel I bzw. ihre Salze und Komplexe sowie ihre festen Lösungen, Interkalations- und Einschlußverbindungen lassen sich als Pigmente verwenden. Zur Verbesserung der Pigmenteigenschaften können die Verbindungen in der Reaktionsmischung gekocht oder die isolierten Verbindungen in Lösungsmitteln wie Toluol, Xylol, 1,2-Dichlorbenzol, Nitrobenzol, i-Butanol oder i-Butanol-Wasser-Gemischen auf Temperaturen von ca. 80-150 °C erhitzt werden. Auf diese Weise kann man ein besonders weiches Korn erzielen. Sie eignen sich insbesondere zum Pigmentieren von organischen Materialien, insbesondere hochmolekularen organischen Materialien.

Sie eignen sich weiterhin insbesondere zum Pigmentieren von Lacken aller Art, für die Herstellung von Druckfarben, Leimfarben oder Binderfarben, für die Massefärbung von synthetischen, halbsynthetischen oder natürlichen makromolekularen Stoffen, wie z. B. Polyvinylchlorid, Polystyrol, Polyamid, Polyethylen oder Polypropylen. Sie können auch für die Spinnfärbung von natürlichen, regenerierten oder künstlichen Fasern, wie z. B. Cellulose-, Polyester-, Polycarbonat-, Polyacrylnitril- oder Polyamidfasern, sowie zum Bedrucken von Textilien und Papier verwendet werden. Aus diesen Pigmenten können

feinteilige, stabile, wäßrige Pigmentdispersionen, die beispielsweise für die Pigmentierung von Dispersions- und Anstrichfarben, für die Papierfärbung, für den Pigmentdruck von Textilien oder für die Spinnfärbung von Viskose brauchbar sind, durch Mahlen oder Kneten in Gegenwart von nichtionogenen, anionischen oder kationischen Tensiden hergestellt werden.

Die neuen Pigmente zeichnen sich durch große Farbstärke, hohes Deckvermögen, sehr gute Lichtechtheiten, hervorragende Lösungsmittelechtheiten und Temperaturstabilität aus.

Beispiel 1

a) 25 g Benzolsulfonsäurehydrazid, 200 ml Wasser, 20 ml 10 N Salzsäure und 1,25 g eines Kondensationsproduktes von Stearinsäure mit Taurin werden 30 Minuten verrührt. Man fügt 60 g Eis hinein und tropft anschließend in ca. 30 Minuten 34 ml einer wäßrigen Natriumnitritlösung mit einem Gehalt von 30 g Natriumnitrit in 100 ml Lösung hinzu. Der Ansatz wird 30 Minuten gerührt, wobei man einen Nitritüberschuß aufrecht erhält. Anschließend zerstört man den Nitritüberschuß mit wenig Amidosulfonsäure und neutralisiert die überschüssige Säure mit ca. 5 ml 10 N Natronlauge (pH 4-7). Man erhält eine Emulsion von Benzolsulfonsäureazid.

b) Zu einer nach 1 a hergestellten Emulsion gibt man 18,1 g Barbitursäure und 30 ml 10 N Natronlauge. Die Mischung wird auf 70 °C aufgeheizt und diese Temperatur 2 Stunden gehalten. Man erhält eine Lösung bzw. Suspension des Natriumsalzes der Diazobarbitursäure, die daneben noch Benzolsulfonamid enthält.

c) Zu einer nach 1 b hergestellten Suspension gibt man 22,5 g 2-Cyanimino-barbitursäure und 5 g Bersteinsäure, rührt kurz nach und bringt danach den pH mit ca. 7,5 ml 10 N Natronlauge auf 5,5-5,6. Man erhöht die Temperatur auf 95 °C und rührt 6 Stunden, wobei man den pH-Wert bei 5,5 und die Temperatur bei 95 °C hält. Es entsteht eine Suspension des Natriumsalzes der Monocyanimino-azobarbitursäure.

d) Der pH-Wert einer nach 1 c hergestellten Suspension wird mit konz. Salzsäure auf pH 1 herabgesetzt und noch 1 Stunde auf 95 °C erhitst. Danach wird bei 90 °C abgesaugt und mit 90 °C heißem Wasser gewaschen. Nach dem Trocknen in einem Umlufttrockenschrank bei 70 °C erhält man 47,3 g einer Verbindung, die in einer ihrer möglichen tautomeren Formen der folgenden Strukturformel entspricht.

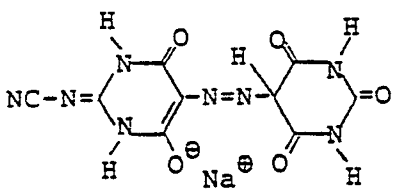

Die Verbindung enthält Kristallwasser, das bei schärferen Trocknen teilweise entfernt wird.

Analyse : (berechnet für $C_9H_5N_8O_5Na.2H_2O$ ; MG 364,2)
ber. : 29,7 % C, 30,7 % N, 6,39 % Na.
geb. : 30,8 % C*, 30,6 % N, 6,1 % Na.

Das IR-Spektrum in KBr (μ) zeigt drei intensive Banden bei 4,55 ; 6,15 ; 7,3.
Die Verbindung färbt Lacke und Kunststoffe in klaren orangen Tönen.

Beispiel 2

Verfährt man wie bei Beispiel 1 d ; gibt jedoch vor dem Herabsetzen des pH-Wertes noch 19,6 g $BaCl_2 \cdot 2H_2O$ hinzu, so erhält man nach analoger Aufarbeitung 55 g eines Produktes der Formel $(C_9H_5N_8O_5)_2 \cdot Ba \cdot x\ H_2O$.

Analyse : (für x = 4 ; MG 819,8)
ber. : 26,4 % C, 27,3 % N, 16,75 % Ba.
gef. : 27,4 % C, 26,8 % N, 16,4 % Ba.

IR-Banden in KBr (μ) : 4,55 ; 6,1 ; 7,3.
Die Verbindung färbt Lacke in klaren rotstichig orangen Tönen.

* Da die letzten Reste an Verunreinigungen (Dispergiermitel, überschüssige Kupplungskomponenten, Benzolsulfonamid) nur schwer auszuwaschen sind, liegt der Kohlenstoffwert in der Regel etwas zu hoch.

Beispiel 3

Zu einer nach Beispiel 1 c hergestellten Suspension des Natriumsalzes der Monocyaniminoazobarbitursäure gibt man 39 g $SrCl_2 \cdot 6\,H_2O$, bringt den pH-Wert mit etwas konzentrierter Salzsäure auf 4 und erhitzt noch 2 Stunden auf 95 °C. Nach Aufarbeiten wie bei Beispiel 1 d erhält man 54,6 g eines Produktes der Formel $(C_9H_5N_8O_5)_2 \cdot Sr \cdot x\,H_2O$.

Analyse : (für x = 6 ; MG 806,1)
ber. : 26,8 % C, 27,8 % N, 10,9 % Sr.
gef. : 26,9 % C, 26,6 % N, 10,0 % Sr.

IR-Banden in KBr (μ) : 4,6 ; 6,15 ; 7,35.
Die Verbindung färbt Lacke und Kunststoffe in gelbstichig orangen Tönen.

Beispiel 4

Ein nach Beispiel 1 d hergestellter Preßkuchen wird mit 500 ml Wasser angerührt, auf 95 °C aufgeheizt und 25 g $MnCl_2 \cdot 4\,H_2O$ zugegeben. Nach 5 Stunden bei 95 °C wird abgesaugt und wie bei Beispiel 1 aufgearbeitet. Man erhält 49,7 g des Mangansalzes der Monocyaniminoazobarbitursäure.
IR-Spektrum in KBr (μ) : 4,55 ; 6,1 ; 7,3.
Die Verbindung ergibt in einem lufttrocknenden Lack eingearbeitet blauchtichig rote Töne.

Beispiel 5

Ersetzt man in Beispiel 4 das Mangansalz durch eine äquivalente Menge $ZnCl_2$, so erhält man den analogen Zinkkomplex in einer Ausbeute von 48,6 g (Zinkgehalt : 13,9 %).
IR-Spektrum in KBr (μ) : 4,55 ; 6,15 ; 7,7.
Die Verbindung färbt Alkydharzlacke in orangen Tönen.

Beispiel 6

Ein nach Beispiel 1 d hergestellter Preßkuchen, der nach seinem Trockengehalt 45 g des Natriumsalzes der Monocyaniminoazobarbitursäure enthält, wird mit 500 ml Wasser angerührt und bei 95 °C eine Lösung von 33 g $NiCl_2 \cdot 6\,H_2O$ und 21 g Trinatriumcitrat · 5,5 $H_2O$ in 100 ml Wasser in ca. 5 Minuten zugetropf. Anschließend wird noch 4 Stunden auf 95 °C erhitzt, danach abgesaugt und gründlich mit heißem Wasser gewaschen. Nach Trocknen bei 70 °C erhält man 51,8 g eines Produktes, das bei 160 °C weitere 8,2 g Wasser abgibt.
Analyse : 24,2 % C, 24,0 N, 13,2 Ni.
Nach dieser Analyse handelt es sich um einen Nickel-1 : 1-Komplex der Monocyaniminoazobarbitursäure, der neben ca. 16 % Wasser noch etwas Nickelcitrat enthalten könnte.
IR-Spektrum in KBr (μ) : 4,55 ; 5,8 ; 6,3 ; 7,15.
Die Verbindung färbt Alkydharzlacke in gelblichbraunen Tönen.

Beispiel 7

Verfährt man wie bei Beispiel 6, gibt jedoch zu der Suspension des Natriumsalzes zusätzlich noch 30 g 3-Nitrobenzolsulfonamid hinzu, so erhält man 72,3 g eines Produktes, das bei 160 °C noch 2,8 % Wasser abgibt.
Das IR-Sepktrum zeigt zusätzlich zu den Banden bei 4,55 ; 5,8 ; 6,3 und 7,2 μ noch Banden bei 6,55 und 7,4 μ, die in dem nach Beispiel 6 hergestellten Produkt nicht vorhanden sind und auf 3-Nitrobenzolsulfonamid zurückgeführt werden können.

Beispiel 8

Verfährt man wie bei Beispiel 6, gibt jedoch zu der Suspension des Natriumsalzes zusätzlich 40 g Anthrachinon-2-sulfonsäure-Natriumsalz und tropft eine Lösung von 50 g $NiCl_2 \cdot 6\,H_2O$ und 21 Trinatriumcitrat · 5,5 $H_2O$ in 150 ml Wasser zu, so erhält man 79,2 g eines Produktes, das bei 160 °C noch 6,8 % Wasser abgibt.
Das IR-Spektrum zeigt neben den Banden, wie sie die nach Beispiel 6 hergestellte Verbindung aufweist, noch zusätzliche Banden, die auf die Anthrachinonsulfonsäure zurückgeführt werden können.

Beispiel 9

a) Man verfährt wie bie Beispiel 1a-1b, gibt jedoch zu der Suspension der Diazobarbitursäure 22,2 g 2-Cyanimino-4-imino-barbitursäure und 5 g Bernsteinsäure und erhitzt 4 h auf 95 °C, wobei man mit

wenig Natronlauge einen pH-Wert von 5,5 aufrechterhält. Anschließend wird abgesaugt und der Preßkuchen gründlich mit siedend heißem Wasser gewaschen.

b) Der nach 9 a hergestellte Preßkuchen wird mit 500 ml Wasser angerührt, auf 95 °C aufgeheizt, 39 g $BaCl_2 \cdot 2\,H_2O$ zugegeben und noch 4 Stunden bei 95 °C gehalten. Anschließend wird abgesaugt mit heißem Wasser gewaschen und das Produkt bei 70 °C getrocknet. Man erhält 50,4 g einer Verbindung, die in einer ihrer möglichen tautomeren Formen der folgenden Formel entspricht.

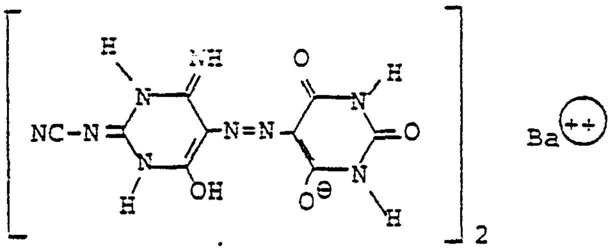

Analyse : $((C_9H_8N_9O_4)_2 \cdot Ba \cdot x\,H_2O$ ; berechnet für x = 4 ; MG 817,9)
ber. : 26,4 %, C 30,8 %, N 16,8 % Ba.
gef. : 27,5 %, C 30,6 %, N 16,5 % Ba.

Die Substanz färbt Alkydharzlacke in fabrstarken orangen Tönen.

Beispiel 10

Verfährt man wie bei Beispiel 9a, saugt jedoch nicht unmittelbar ab, sondern gibt zunächst 19,6 g $BaCl_2 \cdot 2\,H_2O$ hinzu, erhitzt weitere 4 Stunden auf 95 °C bei einem pH-Wert von 5,5 und isoliert dann wie bei Beispiel 9 b, so erhält man 57,7 g einer Substanz, deren Analyse die folgenden Werte ergibt.

Analyse : 28,4 % C, 28,7 % N, 8,1 % Ba, 4,8 % Na.

Das IR-Spektrum entspricht bis auf geringe Abweichungen im OH- und Gerüstschwingungsbereich dem der Substanz nach Beispiel 9.

Es handelt sich um ein Ba/Na-Salz, das wahrscheinlich noch Succinat eingebaut enthält.

Die Substanz färbt Alkydharzlacke in rotorangen Tönen.

Beispiel 11

Verfährt man wie bei Beispiel 9, setzt aber an Stelle von Bariumchlorid eine äquivalente Menge Strontiumchlorid ein, so erhält man 49,5 g des Strontiumsalzes der 2-Imino-4-cyaniminoazobarbitursäure.

Analyse : $(C_9H_6N_4O_4)_2 \cdot Sr \cdot x\,H_2O$ ; berechnet für x = 1 ; MG 732,1)
ber. : 29,5 % C, 2,2 % H, 34,4 % N, 12,0 % Sr.
gef. : 30,1 % C, 3,0 % H, 33,5 % N, 12,3 % Sr.

Die Substanz färbt Alkydharzlacke in rotorangen Tönen mit guten Lichtechtheiten.

Beispiel 12

Verfährt man wie bei Beispiel 9 b, setzt jedoch an Stelle von Bariumchlorid 34,5 g $NiCl_2 \cdot 6\,H_2O$ ein, so erhält man 52,4 g eines Nickelkomplexes der Formel $C_9H_6N_4O_4 \cdot Ni \cdot x\,H_2O$.

Analyse : (berechnet für x = 4 ; MG 434)
ber. : 24,9 % C, 29,1 % N, 13,5 % Ni.
gef. : 26,0 % C, 29,1 % N, 13,0 % Ni.

Der Komplex färbt Weich-PVC in olivbraunen Tönen mit einer sehr guten Lichtechtheit.

Beispiel 13

Verfährt man wie bei Beispiel 10, gibt jedoch an Stelle von Bariumchlorid 23 g wasserfreies Kupfersulfat hinzu und erhitzt noch 4 Stunden bei einem pH-Wert von 4 auf 90 °C, so erhält man nach dem Aufarbeiten 60,2 g eines Kupferkomplexes, der Alkydharzlacke in braunen Tönen färbt.

Beispiel 14

Man gibt zu einer nach 1 b hergestellten Suspension 5 g Bernsteinsäure und 18,8 g 2-Imino-

barbitursäure und erhitzt diese Mischung 8 Stunden auf 95 °C, wobei man den pH-Wert mit Salzsäure bzw. Natronlauge bei 5,5 hält. Anschließend erniedrigt man den pH-Wert mit 5 ml 10 N Salzsäure auf 4, gibt 19,6 g $BaCl_2 \cdot 2\ H_2O$ hinzu und erhitzt noch 1 Stunde auf 95 °C. Nach der üblichen Aufarbeitung erhält man 48,7 g eines Produktes, dem in einer seiner tautomeren Formen die folgende Struktur zukommt :

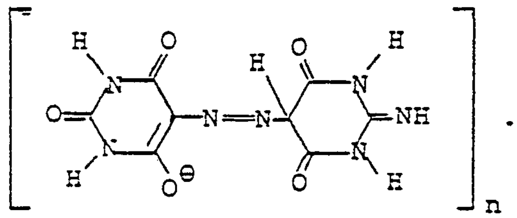

. x Ba . y . Na . z $H_2O$

Nach der Analyse handelt es sich um einen gemischten Natrium-Barium-Komplex.
Analyse : gef. : 27,8 % C, 26,7 % N, 4,9 % Ba, 4,4 % Na.
Das Produkt färbt Alkydharzlacke in rotbraunen Tönen.

Beispiel 15

Verfährt man wie bei Beispiel 14, gibt jedoch an Stelle von 2-Iminobarbitursäure die gleiche Menge an 4-Imino-barbitursäure hinzu, erhitzt 25 Stunden auf 95 °C und isoliert anschließend sofort bei pH 5,5, so erhält man 40,7 g eines Produktes, das in einer seiner tautomeren Formen die folgende wahrscheinliche Struktur zukommt :

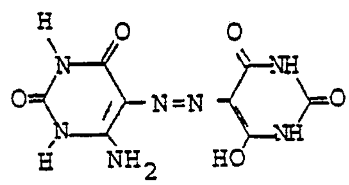

Analyse : $C_8H_7N_7O_5$ ; MG 281,2
ber. : 34,2 % C, 34,9 % N.
gef. : 34,6 % C, 33,5 % N.

Das Produkt färbt Alkydharzlack in gelben Tönen.

Beispiel 16

a) 26,3 g Benzolsulfonsäurehydrazid, 100 ml Wasser, 21 ml 10 N Salzsäure und 1,3 g Emulgator FD (Fettalkohol-Ethylenoxidadditionsprodukt) werden 30 Minuten verrührt, 60 g Eis zugegeben und anschließend in ca. 30 Minuten eine Lösung von 19,5 g Natriumnitrit in 50 ml Wasser zugetropft. Der Ansatz wird 30 Minuten gerührt anschließend der Nitritüberschuß mit wenig Amidosulfonsäure zerstört und die überschüssige Säure mit ca. 5 ml 10 N Natronlauge neutralisiert. Man erhält eine Emulsion von Benzolsulfonsäureazid.

b) Zu einer 16 a hergestellten Emulsion gibt man 40 ml 10 N Natronlauge und streut danach 21,6 g 2-Cyanimino-barbitursäure ein. Man erhitzt der Ansatz 3 Stunden auf 70 °C wobei der Ph-Wert von Anfangs ca. 13 bis auf ca. 10 absinkt. Man erhält eine Lösung bzw. Suspension von 2-Cyanimino-5-diazobarbitursäure.

c) Zu einer nach 16 b hergestellten Suspension gibt man 22,2 g 2-Cyanimino-4-iminobarbitursäure und 5 g Glutarsäure, stellt den pH-Wert mit 5 ml 10 N Salzsäure auf 5,5 und rührt 5 Stunden bei 95 °C und pH 5,5. Danach stellt man den pH-Wert mit wenig Salzsäure auf 4, gibt 39 g $BaCl_2 \cdot 2\ H_2O$ hinzu und hält noch 5 Stunden bei 95 °C und pH 4. Isoliert man wie üblich, so erhält man 66,1 g eines Produktes, dem in einer seiner tautomeren Formen die folgende wahrscheinliche Struktur zukommt :

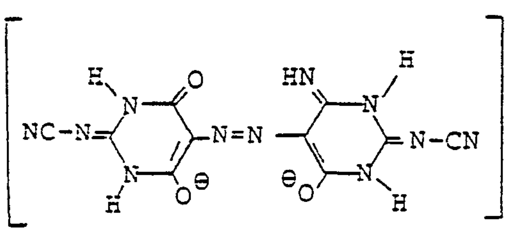

$Ba^{++}$ . x $H_2O$

Analyse : (berechnet für $(C_{10}H_5N_{11}O_3)$ Ba · 3 $H_2O$ ; MG 518,6
ber. : 23,2 % C, 29,7 % N, 26,5 % Ba.
gef. : 24,0 % C, 29,7 % N, 24,2 % Ba.

Die Verbindung färbt Alkydharzlacke in Bordeaux-tönen.

Beispiel 17

Verfährt man wie bei Beispiel 16, verlackt jedoch mit einer äquivalenten Menge Calciumchlorid, so erhält man 55,7 g eines Produktes, das 7,3 % Calcium enthält und ähnliche coloristische Eigenschaften aufweist.

Beispiel 18

Verfährt man wie bei Beispiel 16, verlackt jedoch mit einer äquivalenten Menge Zinkchlorid, so erhält man 57,9 g des entsprechenden Zinksalzes.

Analyse : (berechnet für $(C_{10}H_5N_{11}O_3)$ ·Zn · 3 $H_2O$ ; MG 446,7)
ber. : 26,9 % C, 34,5 % N, 14,6 % Zn.
gef. : 27,3 % C, 34,2 % N, 14,7 % Zn.

Die Verbindung färbt Alkydharzlacke und Weich-PVC in gelborangen Tönen.

Beispiel 19

Verfährt man wie bei Beispiel 16, gibt jedoch an Stelle von Bariumchlorid eine äquivalente Menge Nickelchlorid hinzu und erhitzt weitere 5 Stunden bei einem pH-Wert von 3-3,3 auf 95 °C, so erhält man 63,5 g eines Nickelkomplexes.

Analyse : (berechnet für $(C_{10}H_5N_{11}O_3)$ Ni · 4 $H_2O$ ; MG 458)
ber. : 26,2 % C, 33,6 % N, 12,8 % Ni.
gef. : 26,3 % C, 32,3 % N, 13,3 % Ni.

Das Pigment färbt Alkydharzlacke in braunen Tönen.

Beispiel 20

Man verfährt wie bei Beispiel 1a-1c, setzt jedoch an Stelle der Cyanimino-barbitursäure eine äquivalente Menge 1-(4-Methoxy-phenyl)-barbitursäure ein. Nach der üblichen Aufarbeitung erhält man 56,7 g eines Produktes, das in einer seiner möglichen tautomeren Formen der folgenden Formel entspricht :

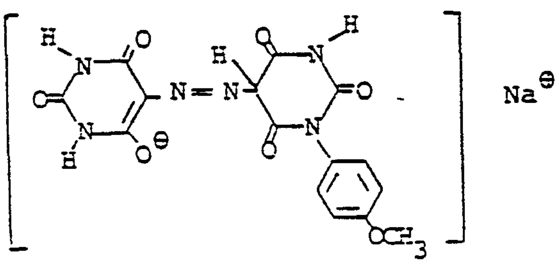

Analyse : (berechnet für $(C_{15}H_{11}N_6O_7)$ · Na · 3 $H_2O$ ; MG 464,3)
ber. : 38,8 % C, 18,1 % N, 4,95 % Na.
gef. : 39,9 % C, 17,7 % N, 4,8 % Na.

Die Verbindung färbt Alkydharzlacke in rotorangen Tönen.

Beispiel 21

Verfährt man wie bei Beispiel 20, trocknet jedoch den Preßkuchen nicht, sondern verrührt ihn nochmals mit 500 ml Wasser, tropft bei 95 °C in 5 Minuten eine Lösung von 34,5 g $NiCl_2 \cdot 6\ H_2O$ und 21 g Trinatriumcitrat in 100 ml Wasser zu, hält weitere 5 Stunden bei 95 °C und isoliert und trocknet wie üblich, so erhält man 57,9 g eines Produktes, das Alkydharzlacke und Weich-PVC in gelben Tönen färbt.

Analyse : (berechnet für $(C_{15}H_{10}N_6O_7) \cdot Ni \cdot 4\ H_2O$), MG 538,1
ber. : 33,5 % C, 15,6 % N, 10,9 % Ni.
gef. : 34,7 % C, 15,7 % N, 11,3 % Ni.

Beispiel 22

Ersetzt man in Beispiel 21 das Nickelchlorid durch eine äquivalente Menge Bariumchlorid, so erhält man 59,4 g einer Verbindung, der Alkydharzlacke in orangen Tönen färbt.

Analyse : (berechnet für $(C_{15}H_{11}N_6O_7)_2 \cdot Ba \cdot 6\ H_2O$ ; MG 1020)
ber. : 35,3 % C, 16,5 % N, 13,5 % Ba.
gef. : 36,5 % C, 16,2 % N, 12,9 % Ba.

Beispiel 23

Verfährt man wie bei Beispiel 1a-1c, ersetzt jedoch die Cyanimino-barbitursäure durch die äquivalente Menge 2-(4-Chlorphenylimino)-barbitursäure, so erhält man nach Absaugen und Trocknen 61,2 g eines Produktes, das in einer seiner möglichen tautomeren Formen der folgenden Formel entspricht :

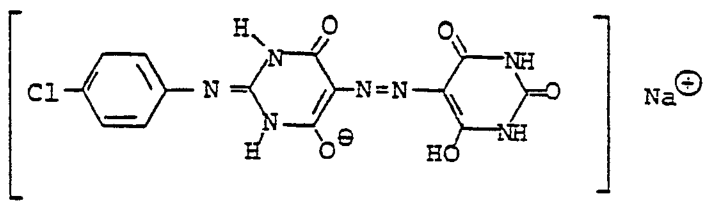

Analyse : (berechnet für $(C_{14}H_9ClN_7O_5) \cdot Na \cdot 2\ H_2O$ ; MG 449,8)
ber. : 37,4 % C, 21,8 % N.
gef. : 37,5 % C, 20,5 % N.

Die Verbindung ergibt in Alkydharzlack eingearbeitet gelborange Färbungen.

Beispiel 24

Verfährt man wie bei Beispiel 23, trocknet jedoch den Preßkuchen nicht, sondern verrührt ihn nochmals mit 500 ml Wasser, erhitzt auf 95 °C, gibt 19,6 g $BaCl_2 \cdot 2\ H_2O$ hierzu und erhitzt noch 3 Stunden auf 95 °C, so erhält man nach der üblichen Aufarbeitung 66,5 g eines Produktes, das Alkydharzlack in orangen Tönen färbt.

Analyse : (berechnet für $(C_{14}H_9ClN_7O_5)_2Ba \cdot 4\ H_2O$ ; MG 990,9)
ber. : 33,9 % C, 19,8 % N.
gef. : 34,7 % C, 19,4 % N.

Beispiel 25

Verfährt man wie bei Beispiel 24, ersetzt jedoch das Bariumchlorid durch die äquivalente Menge Mangansulfat, so erhält man 56,3 g des entsprechenden Mangansalzes, das Alkydharzlack in braunen Tönen färbt.

Analyse : (berechnet für $(C_{14}H_9ClN_7O_5)_2\ Mn \cdot H_2O$ ; MG 436,2)
ber. : 38,5 % C, 22,5 % N, 6,3 % Mn.
gef. : 39,3 % C, 21,7 % N, 6,4 % Mn.

Beispiel 26

Verfährt man wie bei Beispiel 24, gibt jedoch an Stelle von Bariumchlorid eine Lösung von 34,5 g $NiCl_2 \cdot 6\ H_2O$ und 21 g Trinatriumcitrat · 5,5 $H_2O$ in 150 ml Wasser hinzu, so erhält man 59,7 g eines 1 : 1-Nickelkomplexes, der Alkydharzlack in gelbbraunen Tönen färbt.

Beispiel 27

Verfährt man wie bei Beispiel 26, gibt jedoch zusätzlich noch 30 g Pluriol PE 6400®(handelsübliches Ethylenoxid-Propylenoxid-Blockpolymer) hinzu vor Zugabe des Nickelsalzes, und wäscht gründlich

sowohl mit heißem als auch mit kaltem Wasser, so erhält man 89,7 g einer Molekularverbindung aus dem Nickel-1 : 1-Komplex und Pluriol. Die Verbindung ergibt klarere Töne als das nach Beispiel 26 hergestellte Produkt.

Beispiel 28

a) Zu einer nach Beispiel 16 c hergestellten Suspension von 2-Cyanimino-5-diazo-barbitursäure gibt man 22,5 g 2-Cyanimino-barbitursäure und 10 g Trinatriumcitrat · 5,5 $H_2O$, stellt mit 10 N-Salzsäure auf pH = 6,8 und erhitzt 16 Stunden bei diesem pH-Wert auf 95 °C. Danach wird abgesaugt und mit 80 °C heißem Wasser gewaschen. Man erhält eine Paste des Natriumsalzes der 4,4'-Biscyanimino-azobarbitursäure.

b) Eine nach 28 a hergestellte Paste wird mit 500 ml Wasser verrührt, 25 g wasserfreies Natriumacetat eingestreut und auf 95 °C aufgeheizt. Dazu tropft man in 5 Minuten eine Lösung von 60 g $NiCl_2$ · 6 $H_2O$ in 200 ml Wasser und erhitzt den Ansatz noch 4 Stunden auf 95 °C. Nach der üblichen Aufarbeitung erhält man 63,7 g eines Produktes, das in einer seiner tautomeren Formen der folgenden wahrscheinlichen Formel entspricht :

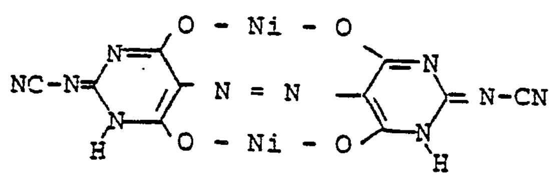

Analyse : (berechnet für $C_{10}H_2N_{10}O_4$ · 2 Ni · 8 $H_2O$ ; MG 857,7)
ber. : 20,4 % C, 23,8 % N, 20,0 % Ni.
gef. : 20,8 % C, 23,5 % N, 19,1 % Ni.

Die Verbindung ergibt in Alkydharzlacken gelbstichig braune Töne.

Beispiel 29

Verfährt man wie bei Beispiel 28 b, gibt jedoch vor dem Zutropfen der Nickelsalzlösung 30 g 3-Nitrobenzolsulfonamid zu dem Ansatz, so erhält man 80,0 g eines Produktes, das überwiegend aus einer Molekularverbindung des Komplexes nach Beispiel 28 mit 3-Nitrobenzolsulfonamid besteht, aus dem man auch mit viel heißem Wasser nur eine geringe Menge des Benzolsulfonamids herauswaschen kann.

Die Substanz färbt Alkydharzlacke in klareren Tönen als das nach Beispiel 28 hergestellte Produkt.

Beispiel 30

19,0 g (0,1 Mol) Diazobarbitursäure und 15,2 g (0,1 Mol) 2-Cyanimino-barbitursäure werden in 300 ml Wasser verrührt. Es werden 16,4 g (0,2 Mol) Natriumacetat hinzugefügt und 20 Std. unter Rückfluß gekocht. Anschließend gibt man 10,4 g (0,05 Mol) Bariumchlorid zu und kocht weitere 30 Min. unter Rückfluß. Danach wird mit ca. 20 ml 10n Salzsäure der pH-Wert auf 1 gesenkt und weitere 30 Min. unter Rückfluß gekocht. Es wird heiß abgesaugt und mit 1 l heißem Wasser (ca. 90 °C) gewaschen.

Man erhält 29,9 g (= 73 % d.Th.) eines Pigments der Formel :

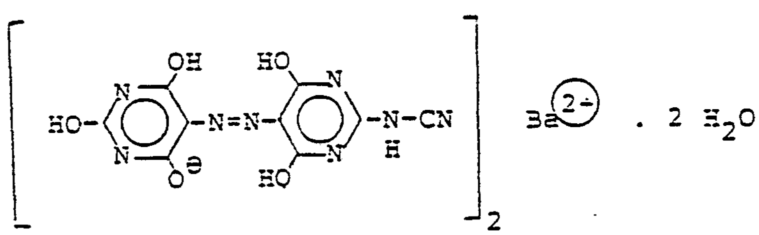

Farbton : klares rotstichiges Orange.

Beispiel 31

Es wird verfahren wie in Beispiel 30. Es wird jedoch zu Beginn der Umsetzung 1,0 g Stearoyltaurid zugesetzt. Die Zugabe der Bariumchlorids kann dann schon nach 15 Stunden erfolgen.

Man erhält das gleiche Pigment in ähnlicher Ausbeute.

Beispiel 32

19,0 g (0,1 Mol) Diazobarbitursäure und 15,2 g (0,1 Mol) 2-Cyanimino-barbitursäure sowie 16,4 g (0,2 Mol) Natriumacetat werden in 300 ml Wasser verrührt. Man gibt 5,5 g (0,05 Mol) Calciumchlorid zu und erhitzt 24 Stunden unter Rückfluß. Danach wird mit ca. 20 ml 10N Salzsäure der pH-Wert auf 1 gesenkt und weitere 30 Min. unter Rückfluß gekocht. Es wird heiß abgesaugt und mit 1 l heißem Wasser (ca. 90 °C) gewaschen.

Man erhält 26,9 g (= 64 % d.Th.) eines Pigments der Formel :

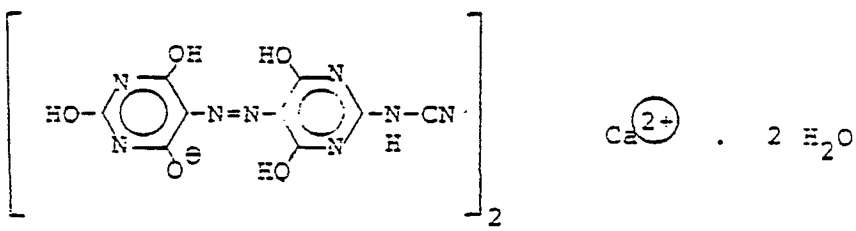

Farbton : klares Orange.

Beispiel 33

19,0 g (0,1 Mol) Diazobarbitursäure und 15,2 g (0,1 Mol) 2-Cyaniminobarbitursäure werden in 300 ml Wasser verrührt. Es wird 16,4 g (0,2 Mol) Natriumacetat hinzugefügt und 20 Stunden unter Rückfluß gekocht. Anschließend gibt man 7,5 g (0,1 Mol) Kaliumchlorid zu und kocht weitere 45 Min. unter Rückfluß. Danach wird mit ca. 20 ml 10n Salzsäure der pH-Wert auf 1 gesenkt und weitere 30 Min. refluxed. Es wird heiß abgesaugt und mit 1 l heißem Wasser (ca. 90 °C) gewaschen.

Man erhält 27,9 g (= 69 % d.Th.) eines orangefarbenen Pigments der Formel :

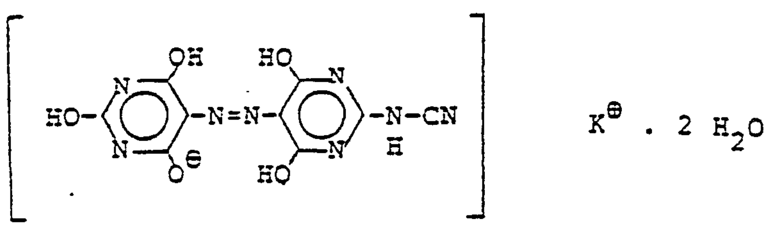

**Patentansprüche**

1. Verbindungen, die in Form ihrer freien Säuren in einer ihrer tautomeren Strukturen der Formel

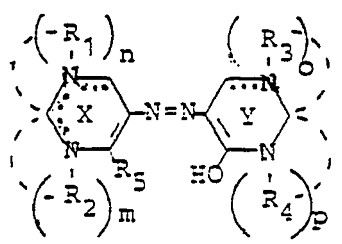 (I)

entsprechen, in der die mit

X und Y bezeichneten Ringe je einen oder zwei Substituenten aus der Reihe =O, =S, $=NR_7$, $-NR_6R_7$, $-OR_6$, $-SR_6$, $-COOR_6$, —CN, $-CONR_6R_7$, $-SO_2R_8$, $-N(R_6)-CN$, Alkyl, Cycloalkyl, Aryl, Aralkyl tragen können, wobei die Summe der endo- und exocyclischen Doppelbindungen für jeden der Ringe X und Y drei ist,

$R_6$ für Wasserstoff, Alkyl, Cycloalkyl, Aryl, oder Aralkyl stehend und

$R_7$ für Wasserstoff, Alkyl, Cyan, Cycloalkyl, Aryl, Aralkyl oder Acyl steht,

$R_8$ Alkyl, Cycloalkyl, Aryl oder Aralkyl bezeichnet,

$R_1$, $R_2$' $R_3$, $R_4$ für Wasserstoff, Alkyl, Cycloalkyl, Aryl oder Aralkyl stehen und weiterhin, wie in Formel

I durch die unterbrochenen Linien angedeutet wird, 5- oder 6-gliedrige Ringe ausbilden können, an die weitere Ringe ankondensiert sein können,

$R_5$ —OH, —$NR_6R_7$, Alkyl, Cycloakyl, Aryl oder Aralkyl bezeichnet, wobei die für $R_1$-$R_8$ genannten CH-Bindungen enthaltenden Substituenten ihrerseits substituiert sein können,

und m, n, o, p 1 oder für den Fall, daß von den Ring-Stickstoffatomen Doppelbindungen ausgehen, wie in Formel I durch die punktierten Linien angedeutet wird, auch 0 bezeichnen können sowie ihre Salze und Komplexe, mit Ausnahme von Azobarbitursäure deren Salzen und Komplexen sowie mit Ausnahme von Azouracil und dessen Alkalisalzen sowie von Uracil-5-azobarbitursäure sowie deren Alkalisalzen.

2. Verbindungen gemäß Anspruch 1, die der Formel I entsprechen, bei denen der mit X bezeichnete Ring für einen Ring der Formeln

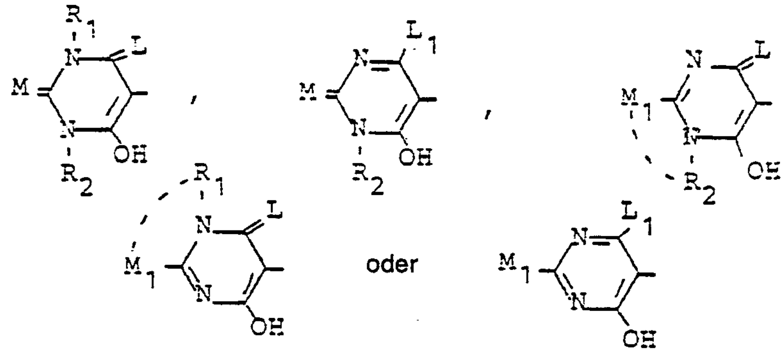
, , oder

steht,
in denen

L, M =O, =S oder =$NR_7$,

$L_1$ Wasserstoff, —$OR_6$, —$SR_6$, —$NR_6R_7$, —$COOR_6$, —$CONR_6R_7$, —CN, Alkyl, Cycloalkyl, Aryl, Aralkyl und

$M_1$ —$OR_8$, —$SR_6$, —$NR_6R_7$, —$COOR_6$, —$CONR_6R_7$, —CN, —$SO_2R_8$, $-\underset{R_6}{N}-CN$, Alkyl, Cycloalkyl, Aryl oder Aralkyl bezeichnen, wobei die Substituenten

$M_1$ und $R_1$ oder $M_1$ und $R_2$ einen 5- oder 6-gliedrigen Ring ausbilden können sowie deren Salze und Komplexe.

3. Verbindungen gemäß Anspruch 1, der Formel I, bei denen der mit Y bezeichnete Ring für einen Ring der Formeln

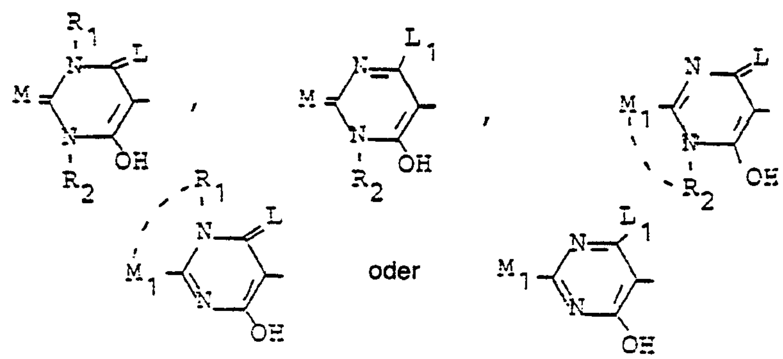
, , oder

steht,
in denen

L, M =O, =S oder =$NR_7$,

$L_1$ Wasserstoff, —$OR_6$, —$SR_6$, —$NR_6R_7$, —$COOR_6$, —$CONR_6R_7$, —CN, Alkyl, Cycloalkyl, Aryl, Aralkyl und

$M_1$ —$OR_6$, —$SR_6$, —$NR_6R_7$, —$COOR_6$, —$CONR_6R_7$, —CN, —$SO_2R_8$, $-\underset{R_6}{N}-CN$, Alkyl, Cycloalkyl, Aryl oder Aralkyl bezeichnen, wobei die Substituenten

$M_1$ und $R_1$ oder $M_1$ und $R_2$ einen 5- oder 6-gliedrigen Ring ausbilden können sowie deren Salze und Komplexe.

4. Verbindungen, die in Form ihrer freien Säuren in einer ihrer tautomeren Strukturen den Formeln II oder III entsprechen

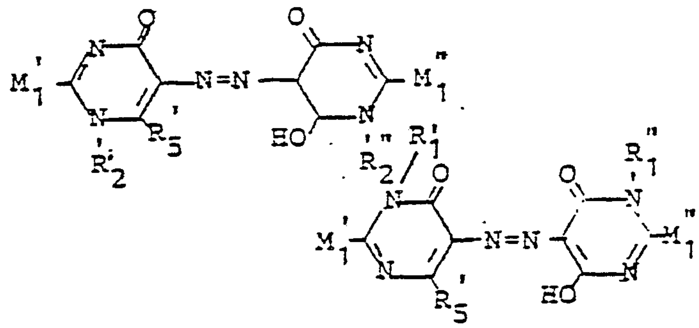

(II)

(III)

in denen
$R_5'$—OH oder —$NH_2$ bezeichnet und
$R_1''$, $R_2'$, $R_2''$ für Wasserstoff steht und
$M_1'$, $M_1''$ Wasserstoff, —OH, —NH—CN, —$NH_2$, Arylamino oder Acylamino bezeichnen sowie deren Salze und Komplexe, mit Ausnahme von Azobarbitursäure sowie ihren Salzen und Komplexen.

5. Cyanimino-azobarbitursäure, die in einer ihrer tautomeren Formen der Formel

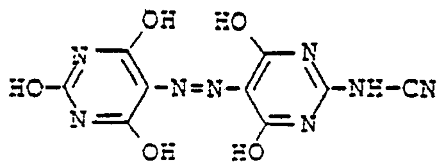

entspricht und ihre Salze und Komplexe.

6. Salze und Komplexe der Mono-, Di-, Tri- und Tetraanionen der Verbindungen gemäß den Ansprüchen 1-5 mit den Metallen Li, Cs, Mg, Cd, Co, Al, Cr, Sn, Pb und insbesondere Na, K, Ca, Sr, Ba, Zn, Fe, Ni, Cu, Mn.

7. Salz der Formel

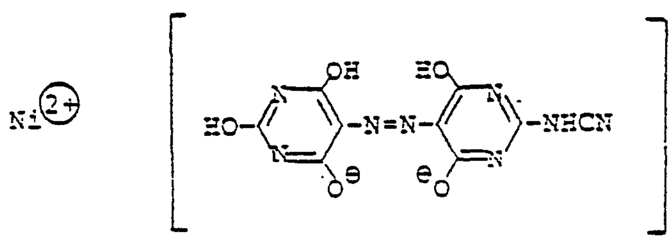

8. Feste Lösungen, Einschluß- und Interkalationsverbindungen der Verbindungen gemäß den Ansprüchen 1-7.

9. Feste Lösungen, Einschluß- und Interkalationsverbindungen gemäß Anspruch 8 enthaltend eine grenzflächenaktive Verbindung.

10. Verwendung von Substanzen gemäß den Ansprüchen 1-9 als Pigmente.

**Claims**

1. Compounds which, in the form of their free acids, correspond in one of their tautomeric structures to the formula

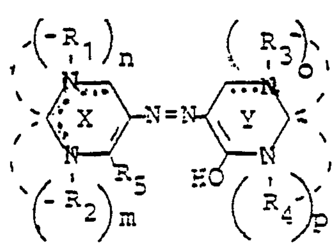

(I)

in which the rings designated
X and Y can each carry one or two substituents from the series comprising =O, =S, =$NR_7$, —$NR_6R_7$,

—$OR_6$, —$SR_6$, —$COOR_6$, —CN, —$CONR_6R_7$, —$SO_2R_8$, $-\underset{R_6}{N}-CN$,

alkyl, cycloalkyl, aryl and aralkyl, the total number of the endocyclic and exocyclic double bonds for each of the rings X and Y being three,

$R_6$ represents hydrogen, alkyl, cycloalkyl, aryl or aralkyl and

$R_7$ represents hydrogen, alkyl, cyano, cycloalkyl, aryl, aralkyl or acyl,

$R_8$ designates alkyl, cycloalkyl, aryl or aralkyl,

$R_1$, $R_2$, $R_3$ and $R_4$ represent hydrogen, alkyl, cycloalkyl, aryl or aralkyl and can also, as indicated by the broken lines in the formula I, form 5- or 6-membered rings to which further rings can be fused,

$R_5$ designates —OH, —$NR_6R_7$, alkyl, cycloalkyl, aryl or aralkyl, it being possible for the substituents mentioned for $R_1$-$R_8$ and containing CH bonds in turn to be substituted and

m, n, o and p to designate 1 or, in the case where double bonds extend from the ring nitrogen atoms, as indicated by the dotted lines in the formula I, also 0

and their salts and complexes, with the exception of azobarbituric acid and its salts and complexes and with the exception of azouracil and its alkali metal salts and of uracil-5-azobarbituric acid and its alkali metal salts.

2. Compounds according to Claim 1, which correspond to the formula I in which the ring designated X represents a ring of the formulae

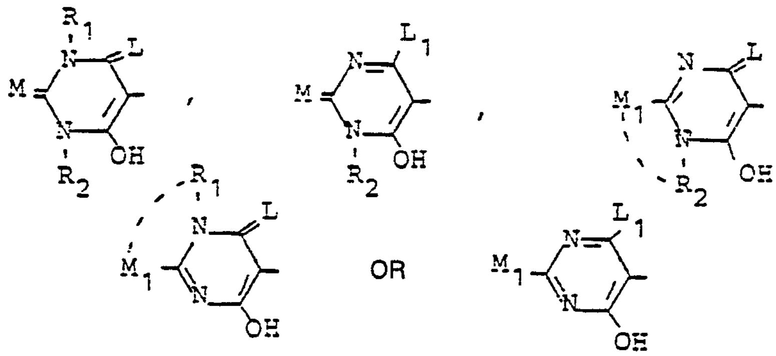

in which

L and M designate =O, =S or =$NR_7$,

$L_1$ designates hydrogen, —$CR_6$, —$SR_6$, —$NR_6R_7$, —$COOR_6$, —$CONR_6R_7$, —CN, alkyl, cycloalkyl, aryl or aralkyl and

$M_1$ designates —$CR_6$, —$SR_6$, —$NR_6R_7$, —$COOR_6$, —$CONR_6R_7$, —CN, —$SO_2R_8$, $-\underset{R_6}{N}-CN$, alkyl,

cycloalkyl, aryl or aralkyl, it being possible for the substituents

$M_1$ and $R_1$ or $M_1$ and $R_2$ to form a 5- or 6-membered ring, and their salts and complexes.

3. Compounds according to Claim 1 and of the formula I in which the ring designated Y represents a ring of the formulae

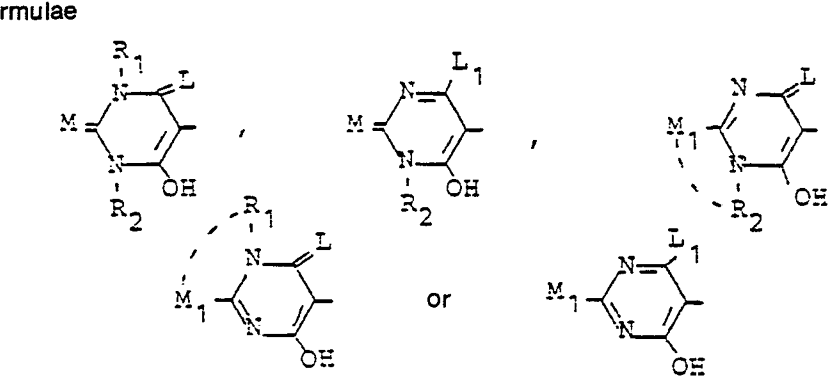

in which

L and M designate =O, =S or =$NR_7$,

$L_1$ designates hydrogen, —$CR_6$, —$SR_6$, —$NR_6R_7$, —$COOR_6$, —$CONR_6R_7$, —CN, alkyl, cycloalkyl, aryl or aralkyl and

$M_1$ designates —$CR_6$, —$SR_6$, —$NR_6R_7$, —$COOR_6$, —$CONR_6R_7$, —CN, —$SO_2R_8$, $-\underset{R_6}{N}-CN$, alkyl,

cycloalkyl, aryl or aralkyl, it being possible for the substituents $M_1$ and $R_1$ or $M_1$ and $R_2$ to form a 5- or 6-membered ring, and their salts and complexes.

4. Compounds which, in the form of their free acids, correspond in one of their tautomeric structures to the formulae II or III

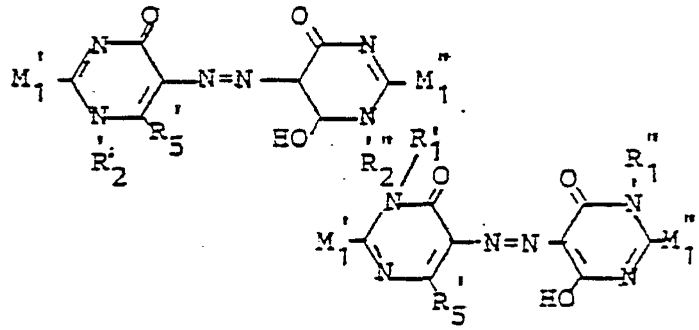

(II)

(III)

in which

$R_5'$ designates —CH or —$NH_2$,

$R_1''$ $R_2''$ and $R_2''$ represent hydrogen and

$M_1'$ and $M_1''$ designate hydrogen, —CH, —NH—CN, —$NH_2$, arylamino or acylamino and their salts and complexes, with the exception of azobarbituric acid and its salts and complexes.

5. Cyanoiminoazobarbituric acid which, in one of its tautomeric forms, corresponds to the formula

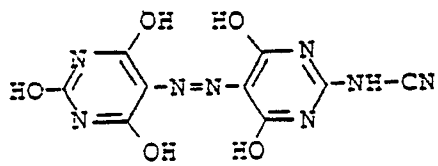

and its salts and complexes.

6. Salts and complexes of the mono-, di-, tri- and tetra-anions of compounds according to Claims 1-5 with the metals Li, Cs, Mg, Cd, Co, Al, Cr, Sn, Pb and in particular Na, K, Ca, Sr, Ba, Zn, Fe, Ni, Cu or Mn.

7. Salt of the formula

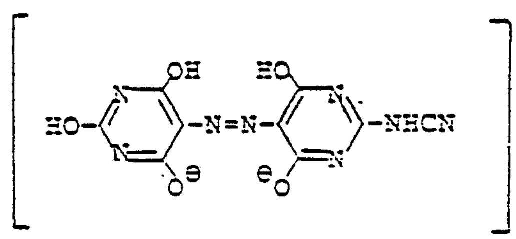

8. Solid solutions and inclusion and intercalation compounds of compounds according to Claims 1-7.

9. Solid solutions and inclusion and intercalation compounds according to Claim 8, containing a surface-active compound.

10. Use of substances according to Claims 1-9, as pigments.

**Revendications**

1. Composés qui, sous la forme de leurs acides libres, correspondent dans l'une de leurs structures tautomères à la formule

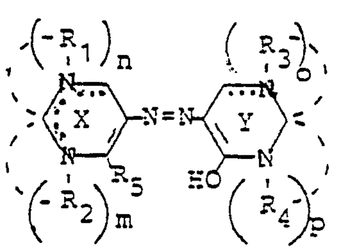

(I)

dans laquelle les noyaux désignés par

X et Y peuvent porter chacun un ou deux substituants de la série =O, =S, $=NR_7$, $-NR_7$, $-NR_6R_7$, $-OR_6$, $-SR_6$, $-COOR_6$, —CN, $-CONR_6R_7$, $-SO_2R_8$, $-\underset{R_6}{\underset{|}{N}}-CN$, alkyle, cycloalkyle, aryle, aralkyle, la somme des doubles liaisons endocycliques et exocycliques pour chacun des noyaux X et Y étant égale à 3,

$R_6$ représente l'hydrogène, un groupe alkyle, cycloalkyle, aryle ou aralkyle et

$R_7$ représente l'hydrogène, un groupe alkyle, cyano, cycloalkyle, aryle, aralkyle ou acyle,

$R_8$ représente un groupe alkyle, cycloalkyle, aryle ou aralkyle,

$R_1$, $R_2$, $R_3$, $R_4$ représentent de l'hydrogène, un groupe alkyle, cycloalkyle, aryle ou aralkyle et peuvent former en outre, comme indiqué dans la formule I par les lignes en traits interrompus, des noyaux pentagonaux ou hexagonaux auxquels d'autres noyaux peuvent être condensés,

$R_5$ est un groupe —OH, $-NR_6R_7$, alkyle, cycloalkyle, aryle ou aralkyle, les substituants contenant des liaisons CH mentionnés pour $R_1$ à $R_8$ pouvant de leur côté être substitués,

et m, n, o, p ont la valeur 1, ou peuvent aussi avoir la valeur zéro au cas où des doubles liaisons partent des atomes d'azote des noyaux, comme indiqué dans la formule I par les lignes en pointillé, ainsi que leurs sels et complexes, à l'exception de l'acide azobarbiturique, de ses sels et complexes, ainsi qu'à l'exception de l'azo-uracile et de ses sels alcalins ainsi que de l'acide uracile-5-azobarbiturique et de ses sels alcalins.

2. Composés suivant la revendication 1, répondant à la formule I, dans lesquels le noyau désigné par X représente un noyau de l'une des formules

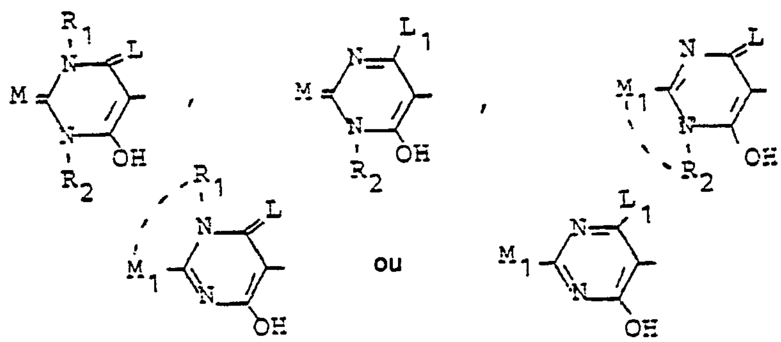

, , ou

dans lesquelles

L, M représentent =O, =S ou $=NR_7$,

$L_1$ est l'hydrogène ou un groupe $-OR_6$, $-SR_6$, $-NR_6R_7$, $-COOR_6$, $-CONR_6R_7$, —CN, alkyle, cycloalkyle, aryle, aralkyle et

$M_1$ désigne un groupe $-OR_6$, $-SR_6$, $-NR_6R_7$, $-COOR_6$, $-CONR_6R_7$, —CN, $-SO_2R_6$, $-\underset{R_6}{\underset{|}{N}}-CN$, alkyle, cycloalkyle, aryle ou aralkyle, les substituants

$M_1$ et $R_1$ ou $M_1$ et $R_2$ pouvant former un noyau pentagonal ou hexagonal, ainsi que leurs sels et complexes.

3. Composés suivant la revendication 1, de formule I, dans lesquels le noyau désigné par Y représente un noyau de l'une des formules

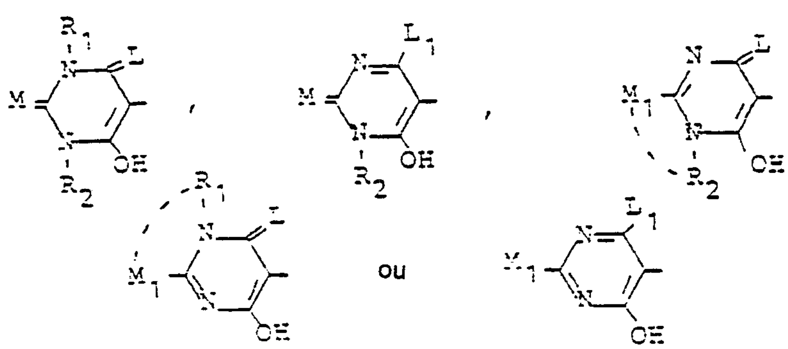

, , ou

dans lesquelles

L, M représentent =O, =S ou $=NR_7$,

$L_1$ représente l'hydrogène, un groupe $—OR_6$, $—SR_6$, $—NR_6R_7$, $—COOR_6$, $—CONR_6R_7$, —CN, alkyle, cycloalkyle, aryle, aralkyle et

$M_1$ est un groupe $—OR_6$, $—SR_6$, $—NR_6R_7$, $—COOR_6$, $—CONR_6R_7$, —CN, $—SO_2R_8$, $-\underset{R_6}{\underset{|}{N}}-CN$, alkyle, cycloalkyle, aryle ou aralkyle, les substituants

$M_1$ et $R_1$ ou $M_1$ et $R_2$ pouvant former un noyau pentagonal ou hexagonal, ainsi que leurs sels et complexes.

4. Composés qui, sous la forme de leurs acides libres, répondent dans l'une de leurs structures tautomères aux formules II ou III

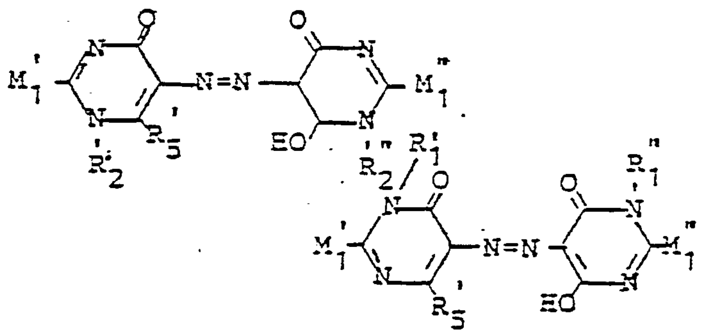

(II)

(III)

dans lesquelles

$R_5'$ est un groupe —OH ou $—NH_2$ et

$R_1''$, $R_2'$, $R_2''$ représentent de l'hydrogène et

$M_1'$, $M_1''$ représentent de l'hydrogène ou un groupe —OH, —NH—CN, $—NH_2$, arylamino ou acylamino ainsi que leurs sels et complexes, à l'exception de l'acide azobarbiturique ainsi que de ses sels et complexes.

5. Acide cyanimino-azobarbiturique qui répond sous l'une de ses formes tautomères à la formule

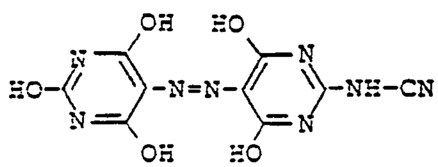

et ses sels et complexes.

6. Sels et complexes des mono-, di-, tri- et tétra-anions des composés suivant les revendications 1 à 5 avec les métaux Li, Cs, Mg, Cd, Co, Al, Cr, Sn, Pb et notamment Na, K, Ca, Sr, Ba, Zn, Fe, Ni, Cu, Mn.

7. Sel de formule

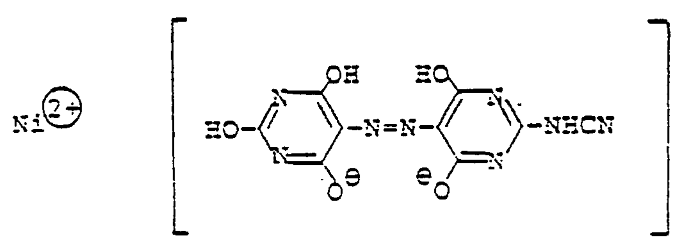

8. Solutions solides, composés d'inclusion et composés d'intercalation des composés suivant les revendications 1 à 7.

9. Solutions solides, composés d'inclusion et composés d'intercalation suivant la revendication 8, contenant un composé à activité interfaciale.

10. Utilisation de substances suivant les revendications 1 à 9 comme pigments.